# FASCICULE DE BREVET EUROPEEN

(11) **EP 2 001 094 B1**
(45) Date de publication et mention de la délivrance du brevet: **13.01.2010**
(21) Numéro de dépôt: 08290431.9
(22) Date de dépôt: 07.05.2008
(51) Int. Cl.: H02G 3/12

(54) **Accessoire pour goulotte électrique**
Zubehör für elektrischen Kabelkanal
Accessory for electric raceway

(30) Priorité: 04.06.2007 FR 0703945
(43) Date de publication de la demande: 10.12.2008
(73) Titulaire: Inovac, 72140 Sillé-le-Guillaume (FR)
(72) Inventeur: Adam, Damien, 72240 Domfront en Champagne (FR); Robinet, Franck, 53100 Mayenne (FR)
(74) Mandataire: Orsini, Fabienne

(56) Documents cités:
- FR-A- 2 833 772

## Description

La présente invention concerne de manière générale les accessoires pour goulottes électriques, tels que, par exemple, des accessoires de renfort à placer à côté d'appareillages électriques rapportés directement sur un socle de goulotte ou encore des accessoires de jonction destinés à établir la jonction entre les extrémités coupées de deux tronçons de couvercle rapportés dans l'ouverture longitudinale d'un socle de goulotte.

Elle concerne plus particulièrement un accessoire à rapporter en travers d'une ouverture longitudinale d'un socle de goulotte, qui comprend deux parties, à savoir, un support et un cache rapporté sur ledit support, ainsi que des moyens d'accrochage conformés le long de deux côtés transversaux parallèles de l'accessoire et agencés pour coopérer avec des bandes de clipsage parallèles dudit socle afin de stabiliser localement la largeur de ladite ouverture longitudinale.

### ARRIERE-PLAN TECHNOLOGIQUE

On connaît déjà du document FR 2 756 431 un accessoire d'immobilisation rigide tel que précité qui, rapporté de manière adjacente à un appareillage électrique monté directement dans le socle d'une goulotte, bloque ledit appareillage électrique en translation selon la direction longitudinale du socle et rigidifie localement les ailes latérales du socle pour éviter tout écartement de celui-ci lors des branchements et débranchements sur ledit appareillage électrique.

Dans cet accessoire d'immobilisation, le cache est simplement encliqueté sur le support pour coiffer sa face avant et il comprend sur ses deux côtés longitudinaux parallèles, deux bords tombants qui prennent appui contre le support.

Une fois en position sur le support accroché au socle de goulotte, le cache vient s'aligner, d'une part, dans le plan d'un tronçon de couvercle encliqueté sur le socle pour fermer son ouverture longitudinale, et, d'autre part, dans le plan de l'enjoliveur de l'appareillage électrique monté directement dans ce socle.

Ainsi, d'un côté, le bord transversal de l'extrémité coupée dudit tronçon de couvercle vient buter contre un des bords tombants du cache, et, de l'autre côté, le bord de l'enjoliveur de l'appareillage électrique se positionne de manière adjacente à l'autre bord tombant dudit cache.

Toutefois, le tronçon de couvercle, coupé à la demande en fonction de l'implantation des divers appareillages électriques le long du socle de goulotte, n'est habituellement pas immobilisé suivant l'axe longitudinal du socle. Il peut donc, à la suite de nombreux branchements et débranchements réalisés sur les appareillages électriques, se déplacer et créer un jeu par rapport à l'accessoire d'immobilisation. Des corps étrangers, éventuellement métalliques, peuvent être introduits à l'intérieur du socle au travers de ce jeu ce qui n'est pas souhaitable.

Enfin on connaît du document FR 2 833 772 un accessoire tel que défini en introduction dans lequel le cache comporte, en porte-à-faux, le long d'au moins un côté longitudinal, une avancée destinée à recouvrir un bord transversal d'une extrémité coupée d'un tronçon de couvercle rapporté dans l'ouverture longitudinale du socle.

Ici aussi le cache est simplement encliqueté sur le support pour coiffer sa face avant.

### OBJET DE L'INVENTION

Par rapport à l'état de la technique, la présente invention propose un nouvel accessoire pour goulotte électrique qui, en position sur le socle, facilite la mise en place adjacente d'un tronçon de couvercle et qui réalise une jonction étanche entre lui et le bord transversal de l'extrémité coupée dudit tronçon de couvercle.

Plus particulièrement, selon l'invention, il est proposé un accessoire selon la revendication 1.

D'autres caractéristiques avantageuses et non limitatives de l'accessoire selon l'invention sont énoncées dans les revendications 2 à 38.

L'invention propose également un ensemble électrique comprenant, d'une part, une goulotte avec un socle de goulotte présentant une ouverture longitudinale munie de deux bandes de clipsage aptes à permettre le montage direct d'appareillages électriques, chaque bande de clipsage comprenant une aile longitudinale rattachée à une extrémité d'un retour d'une aile latérale dudit socle de goulotte, chaque bande de clipsage étant pourvue de moyens d'immobilisation, et, d'autre part, un accessoire selon la présente invention dont les moyens d'immobilisation sont adaptés à coopérer avec lesdits moyens d'immobilisation du socle de goulotte.

Selon une caractéristique avantageuse de l'ensemble électrique conforme à l'invention, les ailes longitudinales des bandes de clipsage du socle de goulotte comprennent au moins un cran adapté à recevoir un plot dudit accessoire.

Selon une autre caractéristique avantageuse de l'ensemble électrique conforme à l'invention, les ailes longitudinales des bandes de clipsage du socle de goulotte comprennent au moins une série de stries adaptées à coopérer avec une série de stries complémentaires prévues sur l'accessoire.

Selon une autre caractéristique avantageuse de l'ensemble électrique conforme à l'invention, les ailes longitudinales des bandes de clipsage du socle de goulotte comprennent des ondulations adaptées à coopérer avec des ondulations complémentaires prévues sur l'accessoire.

### DESCRIPTION DETAILLEE D'UN EXEMPLE DE REALISATION

La description qui va suivre en regard des dessins annexés, donnée à titre d'exemple non limitatif, fera bien comprendre en quoi consiste l'invention et comment elle peut être réalisée.

Sur les dessins annexés :
- la figure 1 est une vue schématique en perspective d'un appareillage électrique auquel sont appariés deux accessoires selon l'invention;
- la figure 2 est une vue schématique en perspective du cache de l'accessoire de la figure 1 ;
- la figure 3 est une vue de dessous du cache de la figure 2;
- la figure 4 est une vue schématique en perspective du support de l'accessoire de la figure 1;
- la figure 5 est une vue de dessous du support de la figure 4 ;
- les figures 6 à 11 sont des vues schématiques en perspective représentant les différentes étapes de montage de l'appareillage électrique de la figure 1 dans un socle de goulotte;
- la figure 12 est une vue en coupe selon le plan A-A de !a figure 6 ;
- la figure 13 est une vue en coupe selon le plan A-A de la figure 8 ;
- la figure 14 est une vue en coupe selon le plan A-A de la figure 11 ;
- la figure 15 est une vue en coupe selon le plan B1-B1 de la figure 11;
- la figure 16 est une vue en coupe selon le plan B2-B2 de la figure 11 ;
- les figures 17 et 18 sont deux vues de détail d'un côté transversal de l'accessoire de la figure 11 avec et sans son cache en position d'utilisation;
- les figures 19 et 20 sont deux vues partielles de détail du montage du support de la figure 4 dans un socle de goulotte;
- les figures 21 et 22 sont des vues schématiques en perspective représentant deux étapes de montage dans un socle de goulotte de l'appareillage électrique de la figure 1 auquel est apparié un autre mode de réalisation de l'accessoire selon l'invention;
- la figure 23 est une vue schématique de dessous du cache de l'accessoire de la figure 21 ;
- la figure 24 est une vue en perspective de dessus du cache de la figure 23 ;
- la figure 25 est une vue schématique en perspective de dessus du support de l'accessoire de la figure 21;
- la figure 26 est une vue de dessous du support de la figure 25;
- la figure 27 est une vue de détail d'un côté transversal du support de l'accessoire de la figure 21 ;
- les figures 28 et 29 sont deux vues schématiques en perspective d'un autre appareillage électrique auquel est apparié un autre mode de réalisation de l'accessoire selon l'invention sans et avec son cache;
- les figures 30 et 31 sont des vues schématiques en perspective représentant deux étapes de montage dans un socle de goulotte de l'appareillage électrique de la figure 29;
- la figure 32 est une vue schématique en perspective de dessous d'un cache d'un autre mode de réalisation de l'accessoire selon l'invention;
- la figure 33 est une vue schématique en perspective de dessus du support de l'accessoire dont le cache est représenté sur la figure 32 ;
- la figure 34 est une vue de dessous du support de la figure 33;
- les figures 35 et 36 sont des vues schématiques en perspective représentant deux étapes de montage dans un socle de goulotte de l'appareillage électrique de la figure 1 auquel est apparié l'accessoire des figures 32 et 33;
- la figure 37 est une vue schématique d'une variante de l'étape de montage représentée sur la figure 36 ;
- la figure 38 est une vue schématique en coupe longitudinale de l'accessoire de la figure 35 placé dans sa position finale d'utilisation dans le socle de goulotte ;
- la figure 39 est une vue schématique en coupe transversale de l'accessoire de la figure 35 placé dans sa position finale d'utilisation dans le socle de goulotte ;
- la figure 40 est une vue en coupe selon le plan A-A de la figure 35 ;
- les figures 41 et 42 sont deux vues schématiques partielles en perspective de l'appareillage électrique de la figure 1 auquel est apparié un autre mode de réalisation de l'accessoire selon l'invention sans et avec son cache;
- la figure 43 est une vue schématique en perspective de dessus de l'appareillage électrique de la figure 42 monté dans un socle de goulotte ;
- la figure 44 est une vue en coupe selon le plan A-A de la figure 43 ;
- les figures 45 à 47 sont des vues schématiques représentant les différentes étapes de montage de l'accessoire de la figure 41 utilisé en tant que joint de couvercle ;
- la figure 48 est une vue en coupe selon le plan A-A de la figure 47 ;
- la figure 49 est une vue schématique en perspective d'un autre socle de goulotte spécialement adapté au montage du support de la figure 50 ;
- la figure 50 est une vue schématique en perspective de dessous d'un support d'un autre mode de réalisation de l'accessoire selon l'invention ;
- la figure 51 est une vue schématique de dessus du support de la figure 50 monté dans l'ouverture longitudinale du socle de la figure 49 ;
- les figures 52A à 52G sont des vues partielles en perspective de variantes de réalisation du socle de goulotte de la figure 49 ;
- la figure 53 est une vue schématique en perspective d'un autre mode de réalisation de l'accessoire selon l'invention ;
- la figure 54 est une vue selon la flèche F d'une extrémité de l'accessoire de la figure 53 ;
- la figure 55 est une vue selon la flèche F' de l'accessoire de la figure 53 ;
- la figure 56 est une vue partielle de côté de l'accessoire de la figure 53 monté sur un socle de goulotte ;
- la figure 57 est une vue schématique en perspective de dessus du support de l'accessoire de la figure 53 ;
- la figure 58 est une vue de dessous du support de la figure 57;
- la figure 59 est une vue schématique en perspective du cache de l'accessoire de la figure 53;
- la figure 60 est une vue de dessous du support de la figure 59;
- la figure 61 est une vue schématique de dessus de l'accessoire de la figure 53 monté dans l'ouverture longitudinale d'un socle de goulotte à côté d'un appareillage électrique ;
- la figure 62 est une vue en loupe d'une extrémité de l'accessoire de la figure 61 ;
- les figures 63 à 68 sont des vues schématiques partielles en perspective représentant les différentes étapes de montage de l'accessoire de la figure 53 dans l'ouverture longitudinale d'un socle de goulotte à côté d'un appareillage électrique;
- la figure 69 est une vue en coupe selon le plan A-A de la figure 68;
- la figure 70 est une vue schématique en perspective d'un autre mode de réalisation de l'accessoire selon l'invention ;
- la figure 71 est une vue schématique de dessous de l'accessoire de la figure 70 ;
- la figure 72 est une vue schématique en perspective de dessus du support de l'accessoire de la figure 70;
- la figure 73 est une vue selon la flèche G du support de la figure 72;
- la figure 74 est une vue schématique en perspective du cache de l'accessoire de la figure 70; et
- la figure 75 est une vue de dessous du support de la figure 74.

En préliminaire, on notera que les parties similaires ou identiques des différents modes de réalisation de l'invention, représentés sur les différentes figures, ne seront pas systématiquement décrits à chaque fois.

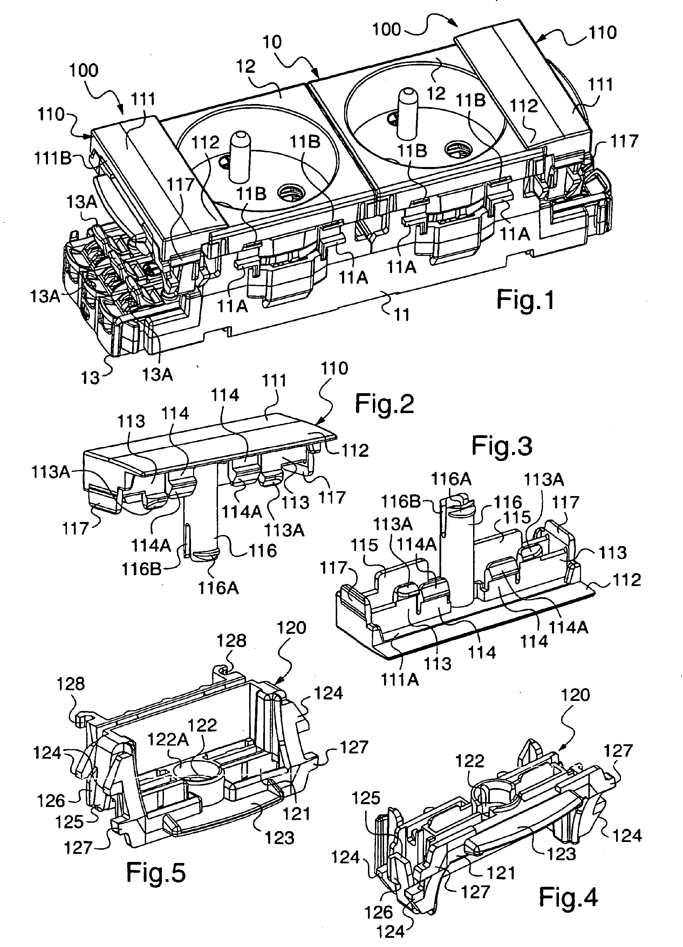

Sur les figures 1 à 20, on a représenté un accessoire 100 pour goulotte électrique, à rapporter en travers d'une ouverture longitudinale 1A d'un socle de goulotte 1.

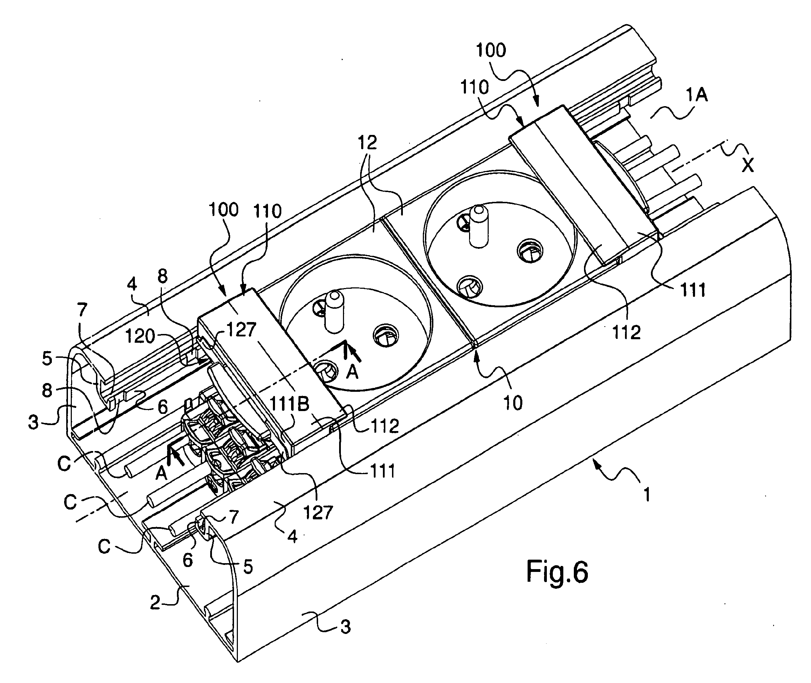

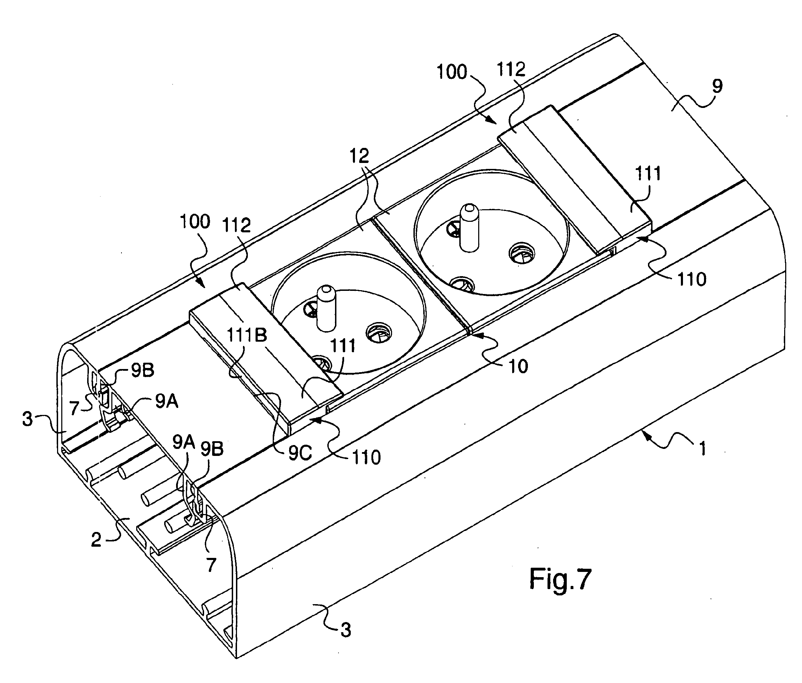

Comme le montrent plus particulièrement les figures 6 et 7, classiquement, une goulotte électrique comporte un profilé, appelé socle de goulotte 1, avec un fond 2 et deux ailes latérales 3 entre lesquelles sont définis une ouverture longitudinale 1A ainsi qu'un espace de réception de divers câbles et appareillages électriques.

Ici, le socle de goulotte 1 présente une section en U et ses deux ailes latérales 3 sont parallèles mais, en variante, il peut présenter une section en V avec deux ailes latérales qui divergent l'une par rapport à l'autre à partir du fond.

L'ouverture longitudinale 1A est fermée par des tronçons de couvercle 9 qui comprennent des pattes 9A, 9B de montage sur des aménagements du socle de goulotte 1.

Les deux ailes latérales 3 du socle de goulotte 1 comprennent des retours 4 dirigés l'un vers l'autre qui s'étendent sensiblement dans le même plan que les tronçons de couvercle 9.

L'ouverture longitudinale 1A du socle de goulotte 1 est bordée par deux parois longitudinales rentrantes 5, parallèles entre elles et aussi parallèles aux deux parois latérales 3 du socle de goulotte 1. Chaque paroi rentrante 5 est rattachée au bord avant d'un retour 4 en étant perpendiculaire à celui-ci.

L'ouverture longitudinale 1A définie ci-dessus est munie de deux bandes de clipsage aptes à permettre le montage des tronçons de couvercle 9 ainsi que le montage d'un appareillage électrique 10 tel que celui représenté sur les figures 1, 6 et 7.

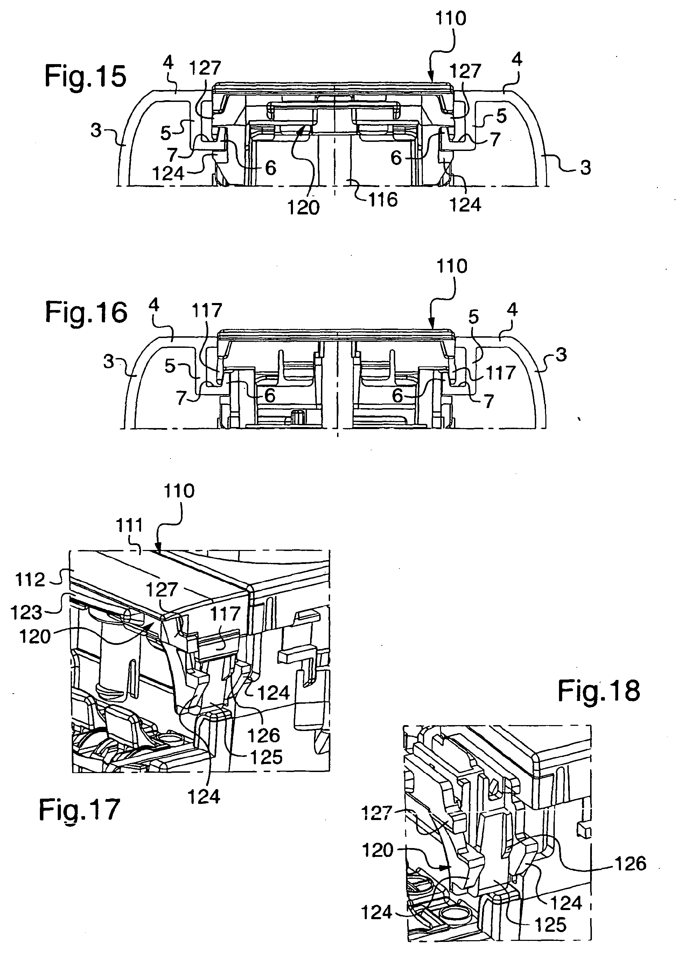

Plus précisément, comme le montrent les figures 15 et 16, chaque bande de clipsage comporte ici une aile longitudinale 6 rattachée par une entretoise 7 à l'extrémité intérieure libre de la paroi rentrante 5 correspondante. Cette entretoise 7 définit avec ladite aile longitudinale 6 et la paroi rentrante 5, une gorge longitudinale ouverte vers l'avant du socle de goulotte 1.

Chaque tronçon de couvercle 9 porte perpendiculairement sur sa face arrière, en parallèle, le long de chacun de ses deux bords longitudinaux, d'une part, une rangée de pattes d'engagement 9B destinées à s'engager dans la gorge longitudinale correspondante du socle de goulotte 1, et, d'autre part, une rangée de pattes d'encliquetage 9A destinées à s'accrocher sous ladite gorge longitudinale (voir figure 7).

L'appareillage électrique 10 représenté sur la figure 1 est ici une double prise de courant. II comprend, d'une part, un socle 11 commun qui contient côte à côte deux mécanismes de prise de courant, et, d'autre part, deux enjoliveurs 12 de prise de courant montés de manière jointive sur le socle 11. Un bornier 13 est prévu à chaque extrémité du socle 11 pour l'alimentation électrique des mécanismes d'appareillage par des conducteurs électriques C provenant du réseau d'alimentation et courant dans le fond du socle de goulotte 1.

Avantageusement, le socle 11 de l'appareillage électrique 10 porte, en saillie, sur deux faces latérales opposées, d'une part, des dents d'accrochage 11A destinées à s'accrocher sous les gorges longitudinales du socle de goulotte 1, et, d'autre part, des languettes 11 B destinées à prendre appui sur le bord libre des ailes longitudinales 6 des bandes de clipsage dudit socle.

Ainsi, l'appareillage électrique 10 est dit « à clipsage direct » sur le socle de goulotte, dans la mesure où il vient s'encastrer, sans mise en oeuvre d'un moyen de fixation particulier, dans l'ouverture longitudinale du socle à l'emplacement choisi par l'installateur. Les enjoliveurs 12 de la double prise de courant viennent alors fermer localement ladite ouverture longitudinale du socle en s'étendant en largeur d'un bord longitudinal à l'autre de celle-ci, sensiblement dans le même plan que les tronçons de couvercle 9.

La flexibilté naturelle du socle de goulotte 1 peut conduire, en cas de contrainte, à un écartement local des deux parois latérales 3 du socle, c'est-à-dire à un élargissement local de l'ouverture longitudinale 1A, préjudiciable à la bonne tenue de l'appareillage électrique 10 sur le socle.

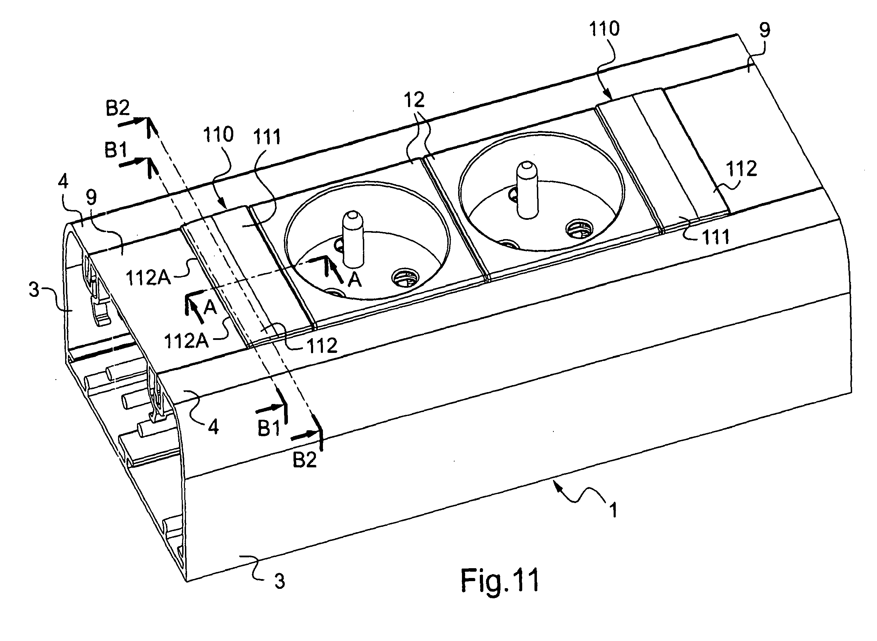

C'est pour cela que, avantageusement, selon un premier aspect de la présente invention représenté sur les figures 1 à 20, on prévoit, un accessoire 100, appelé accessoire de renfort, mis en place dans l'ouverture longitudinale 1A du socle de goulotte 1, au travers de celle-ci, à proximité de l'appareillage électrique 10, pour empêcher, au moins localement, l'écartement de ladite ouverture longitudinale 1A. Pour obtenir ce résultat, il suffit d'un seul accessoire de renfort 100 installé à côté de l'appareillage électrique 10 mais il est préférable d'en disposer deux de part et d'autre de celui-ci, comme cela est représenté sur la figure 11.

Comme le montrent les figures 2 à 5, l'accessoire de renfort 100 se présente sous la forme d'une traverse qui comporte deux parties 110,120, à savoir un support 120 et un cache 110 rapporté sur ledit support 120, ainsi que des moyens d'accrochage 117 conformés le long de deux côtés transversaux parallèles de la traverse et agencés pour coopérer avec les bandes de clipsage parallèles du socle de goulotte 1 afin de stabiliser localement la largeur de son ouverture longitudinale 1A.

Chacune des parties 110, 120 de l'accessoire de renfort est avantageusement réalisée d'une seule pièce par moulage d'une matière plastique.

Ici, les moyens d'accrochage 117 appartiennent au cache 110.

Plus précisément, comme le montrent les figures 2, 3 et 16, le cache 110 se présente sous la forme d'une plaque 111 adaptée à recouvrir la face avant du support 120. Cette plaque 111 porte, sur chacun de ses côtés transversaux parallèles, une nervure 117 adaptée à s'engager derrière l'aile longitudinale 6 de la bande de clipsage correspondante du socle de goulotte 1 dans la gorge longitudinale formée à l'extrémité du retour 4 de l'aile latérale 3 du socle de goulotte 1. Dans le cas typique représenté, les nervures 117 parallèles constituent lesdits moyens d'accrochage.

Selon une caractéristique remarquable de l'accessoire de renfort 100, le cache 110 comporte, en porte-à-faux, le long d'au moins un côté longitudinal, une avancée 112 destinée à recouvrir un bord transversal 9C d'une extrémité coupée d'un tronçon de couvercle 9 rapporté dans l'ouverture longitudinale 1A du socle de goulotte 1 à côté de l'appareillage électrique 10.

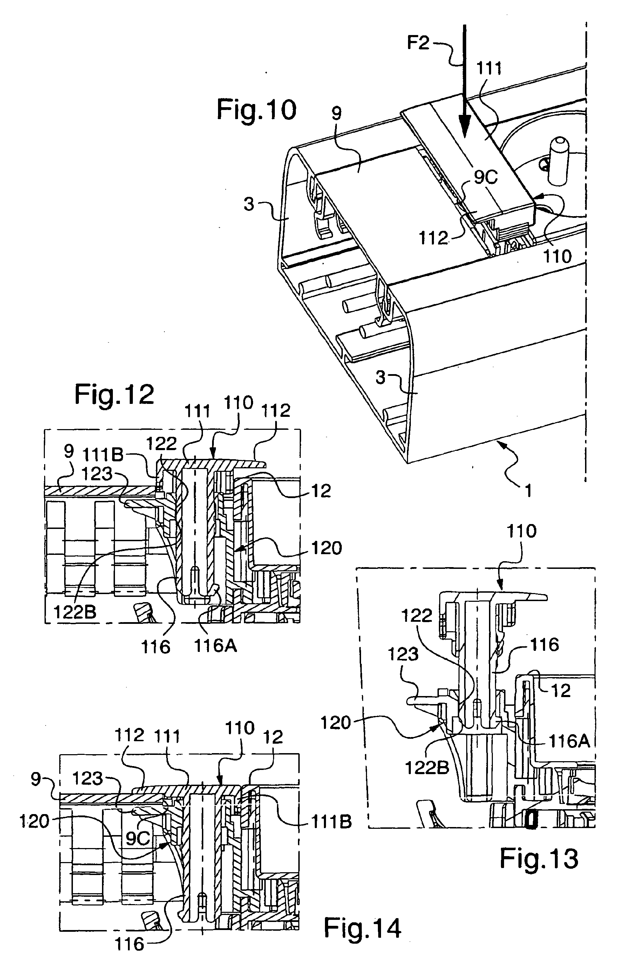

En outre, le cache 110 est monté sur ledit support 120 de manière mobile entre deux positions distinctes, à savoir, une première position, dite « position de livraison » (voir figures 1, 6, 7 et 12), dans laquelle le cache 110 découvre ledit bord transversal 9C de l'extrémité coupée du tronçon de couvercle 9 et une deuxième position, dite « position d'utilisation » (voir figures 11 et 14), dans laquelle ladite avancée 112 du cache 110 recouvre ledit bord transversal 9C de l'extrémité coupée du tronçon de couvercle 9.

Selon l'exemple représenté, le cache 110 est mobile en rotation et en translation sur le support 120. La rotation du cache 110 s'effectue autour d'un axe perpendiculaire au plan du support 120 et la translation s'effectue suivant cet axe perpendiculaire.

La rotation et la translation du cache 110 sur le support 120 est réalisée au moyen d'un pion central 116 porté par la face arrière 111A du cache 110 et engagé à coulissement (suivant son axe) ainsi qu'à rotation autour de son axe dans un puits 122 prévu dans une partie centrale du corps 121 du support 120. Le pion central 116 présente un axe perpendiculaire à ladite face arrière 111A du cache 110.

Le puits 122 du support 120 est traversant, c'est-à-dire qu'il débouche sur les faces avant arrière du support.

Avantageusement, le pion central 116 porte à proximité de son extrémité libre une dent de retenue 116A adaptée à s'accrocher sur un rebord 122B dudit puits 122 (voir figure 13). Plus particulièrement, le rebord 122B du puits 122 est formé ici par un épaulement de la face interne de la paroi latérale 122A du puits 122.

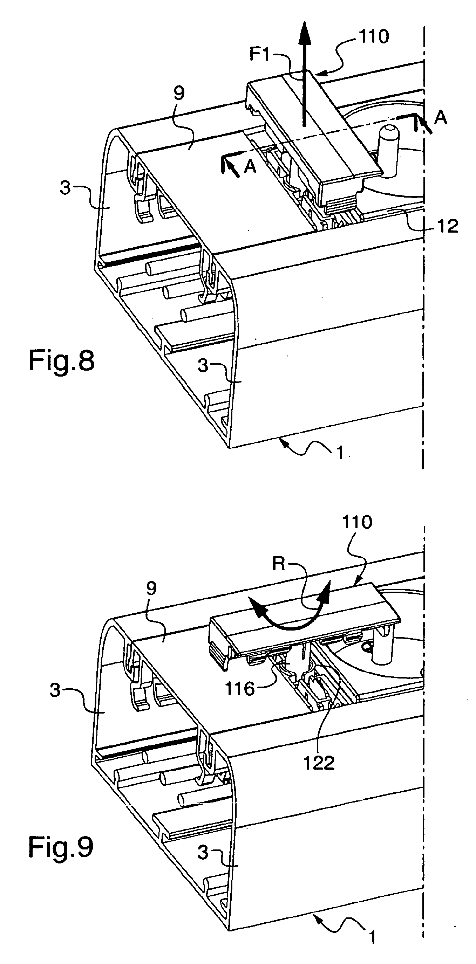

Ainsi, le cache 110 monté sur le support 120 est imperdable puisqu'il reste attaché au support 120, par la mise en butée de la dent de retenue 116A contre le rebord 122B, même lorsqu'il est soulevé par rapport au support 120 et pivoté sur celui-ci pour passer d'une position à l'autre (voir figures 8 à 10 et 12 à 14).

Au surplus, comme le montrent plus particulièrement les figures 2 et 3, le pion central 116, qui se présente sous la forme d'un tube dont la face externe de sa paroi cylindrique porte ladite dent de retenue 116A, comporte dans sa paroi cylindrique, à proximité de ladite dent de retenue 116A, une échancrure longitudinale 116B qui s'étend sur une partie seulement de la hauteur du tube. Cette échancrure longitudinale 116B donne au pion central 116 la flexibilité nécessaire pour, lors du démontage du cache 110, permettre de décrocher facilement ladite dent de retenue 116A du rebord 122B et extraire le pion central 116 du puits 122 du support 120 dans lequel il est engagé.

Comme le montrent les figures 4, 5, 12 et 14, le support 120 comporte, en porte-à-faux, le long d'un côté longitudinal, en correspondance avec l'avancée 112 du cache 110, une plate-forme 123 adaptée à s'engager sous le bord transversal 9C de l'extrémité coupée dudit tronçon de couvercle 9 rapporté dans l'ouverture longitudinale du socle de goulotte 1.

Ainsi, avantageusement, lorsque l'accessoire de renfort 100 est placé en position d'utilisation sur le socle de goulotte 1, à côté de l'appareillage électrique 10, non seulement il stabilise localement la largeur de l'ouverture longitudinale 1A du socle, grâce à ses moyens d'accrochage 117, mais il réalise une jonction étanche entre lui et le bord transversal 9C de l'extrémité coupée du tronçon de couvercle 9 rapporté de manière adjacente dans l'ouverture longitudinale 1A du socle, en prenant ledit bord transversal 9C en sandwich entre l'avancée 112 du cache 110 et la plate-forme 123 du support 120 (voir figure 14).

La plate-forme 123 du support 120 forme avantageusement un appui pour l'extrémité coupée du tronçon de couvercle 9 de façon à éviter que, lors d'un choc ou d'une pression, celui-ci ne s'enfonce dans le socle de goulotte 1.

En outre, la plate-forme 123 constitue un obstacle qui empêche un usager d'introduire à l'intérieur du socle de goulotte 1A un objet fin, comme un fil métallique ou la pointe d'un outil métallique, glissé à force entre le tronçon de couvercle 9 et l'avancée 112 du cache 110.

Avantageusement, on notera que la largeur de la plate-forme 123 du support 120 est telle qu'elle remplit correctement ses fonctions d'appui sous couvercle et d'obstacle à l'insertion de fils métalliques dans le socle de goulotte, tout en laissant dégagées les bornes 13A du bornier 13 pour que, après avoir monté, dans l'ouverture longitudinale 1A du socle, l'appareillage électrique 10 et l'accessoire de renfort 100 à côté d'un des enjoliveurs 12 de l'appareillage, l'installateur puisse encore facilement accéder auxdites bornes afin de câbler ledit appareillage électrique avant de rapporter le tronçon de couvercle 9 de fermeture.

Selon une autre caractéristique remarquable de l'accessoire de renfort 100, il comporte des moyens d'immobilisation 126 conformés en saillie le long d'au moins un des deux côtés transversaux parallèles de l'accessoire et agencés pour coopérer avec des moyens complémentaires 8 prévus sur le socle de goulotte 1 afin d'immobiliser ledit accessoire selon la direction longitudinale X dudit socle.

Avantageusement, selon l'exemple représenté, les moyens d'immobilisation 126 sont distincts des moyens d'accrochage 117.

Ici, les moyens d'immobilisation 126 appartiennent au support 120, mais, selon une variante non représentée, on pourrait prévoir qu'ils appartiennent au cache.

Lesdits moyens d'immobilisation 126 sont solidaires d'au moins une patte 125 rattachée par une liaison flexible (formant charnière de pivotement) au corps 121 du support 120 de l'accessoire de renfort.

Plus particulièrement, comme le montrent les figures 4, 5 et 19, lesdits moyens d'immobilisation comprennent au moins un plot 126 adapté à s'engager dans un cran 8 prévu sur ledit socle de goulotte 1.

Ici, le support 120 comporte sur chacun de ses deux côtés transversaux, une patte 125 rattachée par une liaison flexible au corps 121 du support et portant en saillie sur sa face extérieure un plot 126.

En correspondance, l'aile longitudinale 6 de chaque bande de clipsage du socle de goulotte 1 comporte une pluralité de crans 8 répartis régulièrement suivant la direction longitudinale X du socle.

Chaque cran 8 est formé par un renfoncement ou une encoche de ladite aile longitudinale 6. Lorsqu'un plot 126 du support 120 est engagé dans un cran 8, les deux bords dudit cran 8 forment des butées pour le plot 126 empêchant au support 120 d'être déplacé en translation dans un sens ou dans l'autre suivant la direction longitudinale X du socle.

La pluralité de crans 8 prévue sur le socle de goulotte 1 permet à l'installateur de monter l'accessoire de renfort 100 à n'importe quel endroit choisi du socle en étant assuré que les plots 126 portés par les pattes 125 flexibles du support 120 s'engagent dans deux desdits crans 8 en vis-à-vis pour bloquer en translation ledit support 120 sur le socle.

Le fait que chaque plot 126 d'immobilisation du support 120 soit porté par une patte 125 reliée par une liaison flexible au support 120 présente l'avantage de rendre ledit support 120, et donc l'accessoire de renfort 100, encastrable dans l'ouverture longitudinale d'un socle de goulotte standard qui comprend des bandes de clipsage dépourvues de crans. En effet, dans ce cas, lors du montage du support 120 sur les bandes de clipsage du socle standard, lesdits plots 126 en saillie viennent buter sur lesdites bandes de clispsage dépourvues de crans, qui forment un obstacle. Cet appui provoque le pivotement desdites pattes 125 vers l'intérieur dudit support 120 pour effacer les plots 126 vis-à-vis de cet obstacle.

Pour monter le support 120 sur le socle de goulotte 1, le support 120 comporte sur chacun de ses côtés transversaux parallèles, au moins une dent d'encliquetage 124 adaptée à s'encliqueter sur le socle de goulotte 1.

Ici, comme le montrent plus particulièrement les figures 17, 18 et 20, le support 120 comporte sur chacun de ses côtés transversaux parallèles, deux dents d'encliquetage 124 placées de part et d'autre de la patte 125 flexible portant le plot 126 d'immobilisation.

Chaque dent d'encliquetage 124 est portée par une patte flexible distincte de celle à laquelle sont solidarisés lesdits moyens d'immobilisation, ici le plot 126.

Les dents d'encliquetage 124 sont adaptées à s'accrocher sous les ailes longitudinales 6 des bandes de clipsage du socle de goulotte 1.

Préférentiellement, le support 120 comporte sur ses deux côtés transversaux parallèles au moins une nervure 127 agencée pour prendre appui contre le bord supérieur d'extrémité libre de l'aile longitudinale 6 de la bande de clipsage correspondante du socle de goulotte 1 (voir figure 15). Sur chaque côté transversal du support 120, la nervure 127 s'étend en saillie au-dessus d'une dent d'encliquetage 124. Une fois que le support 120 est encliqueté sur les bandes de clipsage du socle de goulotte 1 au moyen de ses dents d'encliquetage 124, les nervures 127, qui prennent appui sur le bord supérieur libre des ailes longitudinales 6 des bandes de clipsage du socle, évitent lors d'un choc que le support 120 s'enfonce dans le fond dudit socle. Ces nervures 127 forment alors des moyens anti-enfoncement du support 120.

Par ailleurs, il est prévu des moyens de centrage et de verrouillage du cache 110 sur le support 120.

Selon l'exemple représenté sur les figures 2 à 5, lesdits moyens de centrage et de verrouillage comprennent, d'une part, sur le cache 110, au moins une patte d'encliquetage qui porte au moins un cran, et, d'autre part, sur le support 120, au moins une ouverture accueillant ladite patte d'encliquetage et présentant un bord d'accrochage dudit cran porté par ladite patte d'encliquetage.

Plus précisément, la face arrière 111A du cache 110 porte, alignés parallèlement aux bords longitudinaux du cache, deux paires de pattes d'encliquetage 113,114 de longueurs différentes portant chacune à leur extrémité libre un cran d'encliquetage 113A,114A. Ces pattes d'encliquetage 113,114 s'étendent perpendiculairement à la face arrière 111A du cache 110. La face arrière 111A du cache110 porte également deux pattes de centrage 115 alignées et parallèles auxdites pattes d'encliquetage 113,114. Ces pattes de centrage 115 sont dépourvues de crans et sont destinées à s'engager dans des ouvertures correspondantes du support 120 pour placer correctement le cache sur ce dernier.

Les longueurs différentes de pattes d'encliquetage 113, 114 permettent d'ajuster en hauteur le cache 110 sur le support 120 afin d'adapter leur écartement relatif à deux épaisseurs différentes de couvercle de fermeture de goulotte.

Enfin selon l'exemple représenté sur les figures 1 à 20, le support 120 comporte des moyens d'appariement au socle 11 de l'appareillage électrique 10. Ici, comme le montre la figure 5, les moyens d'appariement comprennent des rainures 128 adaptées à s'engager sur des nervures correspondantes du socle 10.

En référence aux figures 1 et 6 à 11, nous allons décrire la mise en position d'utilisation dans une goulotte de l'appareillage électrique 10 muni de ses accessoires de renfort 100.

Tout d'abord, le socle 11 de l'appareillage électrique 10 est équipé de deux accessoires de renfort 100. Les supports 120 de ces accessoires de renfort 100 sont appariés au socle 11 à l'aide des rainures 128 glissées sur les nervures correspondantes du socle 11 de sorte que les deux supports 120 sont placés de part et d'autre des enjoliveurs 12 de manière adjacente à ceux-ci. Chaque cache 110 est monté en position de livraison sur chaque support 120 de l'accessoire, position dans laquelle l'avancée 112 du cache 110 s'étend au-dessus de l'enjoliveur 12 correspondant (voir figures 1 et 6).

L'appareillage électrique 10 équipé de ses accessoires de renfort 100 (avec les caches 110 en position de livraison) est encliqueté sur les bandes de clipsage du socle de goulotte 1, le support 120 de chaque accessoire s'accrochant par ses dents d'encliquetage 124 auxdites bandes de clipsage en prenant appui par ses nervures 127 sur le bord supérieur libre des ailes longitudinales 6 (figure 6). Les plots 126 portés par les pattes 125 flexibles du support 120 s'engagent dans les deux crans 8 en vis-à-vis du socle de goulotte 1.

Dans cette position, l'installateur a accès aux bornes 13A du bornier 13 pour câbler avec des conducteurs C les mécanismes de prise de courant de l'appareillage électrique 10.

Puis l'installateur rapporte les tronçons de couvercle 9 sur le socle de goulotte 1 pour fermer son ouverture longitudinale 1A de part et d'autre de l'appareillage électrique 1 (figure 7). Chaque cache 110 comporte, le long de son bord longitudinal opposé à son avancée 112, un bord tombant 111 B qui forme avantageusement une butée pour le bord transversal 9C de l'extrémité coupée du tronçon de couvercle 9, servant de repère pour couper à la bonne longueur ledit tronçon.

L'installateur soulève (selon la flèche F1) chaque cache 110 au-dessus de l'ensemble (voir figure 8) puis, dans cette position soulevée, le fait pivoter (selon la flèche R) de 360° autour de l'axe du pion central 116 (voir figures 9 et 10). Le soulèvement du cache 110 est autorisé par le coulissement du pion central 116 du cache 110 dans le puits 122 du support 120 correspondant. Dans la position soulevée, chaque cache 110 est retenu sur son support 120 par la mise en butée de la dent de retenue 116A portée par le pion central 116 contre le rebord 122B formé sur la face interne de la paroi cylindrique du puits 122 d'insertion (voir figure 13).

Une fois pivoté, chaque cache 110 est alors abaissé (suivant la flèche F2) sur le support 120 pour être placé dans sa position d'utilisation dans laquelle, d'une part, ses nervures 117 latérales s'engagent derrière les ailes longitudinales 6 des bandes de clipsage du socle de goulotte 1, et d'autre part, son avancée 112 recouvre le bord transversal de l'extrémité coupée du tronçon de couvercle 9 (figure 11).

Dans cette position d'utilisation, chaque accessoire de renfort 100, non seulement, stabilise localement la largeur de l'ouverture longitudinale 1A du socle, grâce à ses moyens d'accrochage 117, mais il réalise une jonction étanche entre lui et le bord transversal 9C de l'extrémité coupée du tronçon de couvercle 9 rapporté de manière adjacente dans l'ouverture longitudinale 1A du socle, en prenant ledit bord transversal 9C en sandwich entre l'avancée 112 du cache 110 et la plate-forme 123 du support 120 (voir figure 14).

La plate-forme 123 de chaque support 120 forme avantageusement un appui pour l'extrémité coupée du tronçon de couvercle 9 de façon à permettre d'éviter que, lors d'un choc ou d'une pression, celui-ci ne s'enfonce dans le socle de goulotte 1.

En outre, le support 120, par ses plots 126, bloque en translation axiale l'accessoire de renfort 100 sur le socle de goulotte 1.

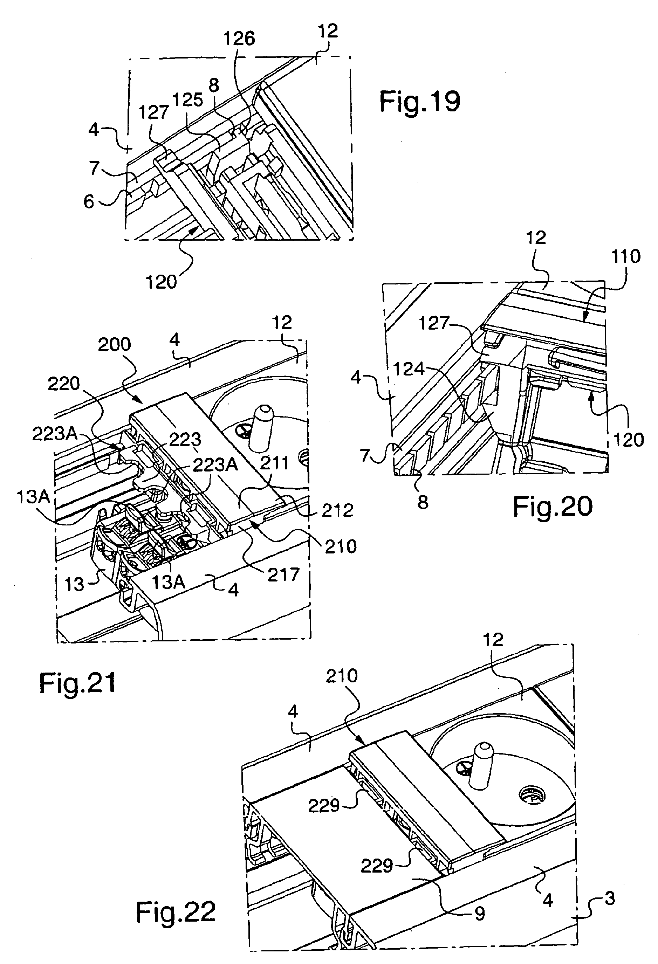

Sur les figures 21 à 27, on a représenté une première variante de réalisation de l'accessoire de renfort décrit ci-dessus.

Pour l'essentiel, cet accessoire de renfort 200 est identique à l'accessoire de renfort 100, c'est pour cela qu'il ne sera pas ici décrit dans le détail mais seules seront décrites de façon détaillée les caractéristiques qui le distingue de ce dernier.

II comporte un support 220 sur lequel est monté un cache 210. Le support 220 et le cache 210 sont deux pièces distinctes réalisées en une seule partie chacune par moulage d'une matière plastique.

Le cache 210 porte sur sa face arrière un pion central 216 d'axe perpendiculaire à ladite face arrière, pourvu à son extrémité libre d'une dent de retenue 216A et d'une échancrure longitudinale 216B. Le pion central 216 est adapté à être engagé dans le puits 222 central du support 220 de façon à pouvoir coulisser suivant l'axe du puits et pivoter autour de son axe à l'intérieur dudit puits.

La partie principale 211 du cache 210, qui est adaptée à recouvrir la face avant du support 220, porte sur ses deux côtés transversaux parallèles, deux nervures 217 adaptées à s'engager derrière les ailes longitudinales des bandes de clipsage du socle de goulotte dans les gorges longitudinales formées à l'extrémité des retours 4 des ailes latérales 3 du socle de goulotte. Ces nervures 217 parallèles constituent lesdits moyens d'accrochage de l'accessoire de renfort 200.

Le cache 210 comporte également, en porte-à-faux, le long d'un côté longitudinal, une avancée 212 adaptée à recouvrir le bord transversal de l'extrémité coupée d'un tronçon de couvercle 9 rapporté dans l'ouverture longitudinale du socle de goulotte, lorsque ledit cache 210 est placé dans sa position d'utilisation sur le support 220.

Le support 220 comporte, en porte-à-faux, le long d'un côté longitudinal, en correspondance avec l'avancée 212 du cache 210, une plate-forme 223 adaptée à s'engager sous le bord transversal de l'extrémité coupée dudit tronçon de couvercle rapporté dans l'ouverture longitudinale du socle de goulotte.

La plate-forme 223 du support 220 comporte dans son bord longitudinal libre trois échancrures 223A alignées qui laissent dégagées les bornes 13A du bornier 13 afin que, après avoir monté dans l'ouverture longitudinale du socle l'appareillage électrique 10 et l'accessoire de renfort 200 à côté d'un des enjoliveurs 12 de l'appareillage, l'installateur puisse encore facilement accéder auxdites bornes pour câbler ledit appareillage électrique avant de rapporter le tronçon de couvercle de fermeture. Bien entendu, malgré ces échancrures 223A, la plate-forme 223 remplit correctement ses fonctions d'appui sous couvercle et d'obstacle à l'insertion de fils ou pointes dans le socle de goulotte.

Selon l'exemple représenté, le support 220 comporte, sur chacun de ses côtés transversaux parallèles, une seule patte 225 rattachée par une liaison flexible (formant charnière d'articulation) au corps 221 du support 220. Chaque patte 225 flexible porte, en saillie, sur sa face externe, d'une part, le plot 226 adapté à coopérer avec un cran du socle de goulotte pour immobiliser en translation l'accessoire 200 sur ledit socle, et, d'autre part, en dessous de ce plot 226, la dent d'encliquetage 224 qui s'accroche sous la bande de clipsage du socle pour solidariser ledit support 220 à ce dernier.

En outre, ici, il est prévu, sur chacun des côtés transversaux parallèles du support 220, deux nervures 227 parallèles, distantes l'une de l'autre, et adaptées à prendre appui contre le bord supérieur d'extrémité libre de l'aile longitudinale de la bande de clipsage correspondante du socle de goulotte. Sur chaque côté transversal du support, ces nervures 227, qui forment des moyens anti-enfoncement du support 220, sont placées de part et d'autre de la patte 225 flexible qui porte les moyens d'immobilisation et les moyens d'encliquetage du support 220 sur le socle.

Par ailleurs, selon l'exemple représenté sur les figures 21 à 27, les moyens de centrage et de verrouillage du cache 210 sur le support 220 comprennent, sur le cache 210, deux pattes d'encliquetage 213 portant une pluralité de crans 213A d'encliquetage. Ces pattes d'encliquetage 213 sont portées par la face arrière du cache 210. Elles s'étendent perpendiculairement à ladite face arrière et sont alignées parallèlement aux bords longitudinaux du cache 210. Elles sont destinées à s'engager dans des ouvertures prévues dans le corps 221 du support 220 de sorte qu'un de leurs crans s'accroche sur le rebord d'accrochage prévu sur la paroi de ces ouvertures.

La pluralité de crans 213A prévue sur les pattes d'encliquetage 213 permet d'ajuster en hauteur le cache 210 sur le support 220 afin d'adapter leur écartement relatif à des épaisseurs différentes de couvercle de fermeture de goulotte.

La face arrière du cache 210 porte deux pattes de centrage 215 alignées et parallèles aux pattes d'encliquetage 213. Ces pattes de centrage 215 sont dépourvues de crans et sont destinées à s'engager dans des ouvertures correspondantes du support 220 pour placer correctement le cache sur ce dernier.

Avantageusement, le support 220 comporte à côté desdites ouvertures accueillant les pattes de centrage 215 et d'encliquetage 213, des zones d'accès 229 au travers desquelles l'installateur peut introduire la pointe d'un outil afin de faciliter le démontage du tronçon de couvercle 9.

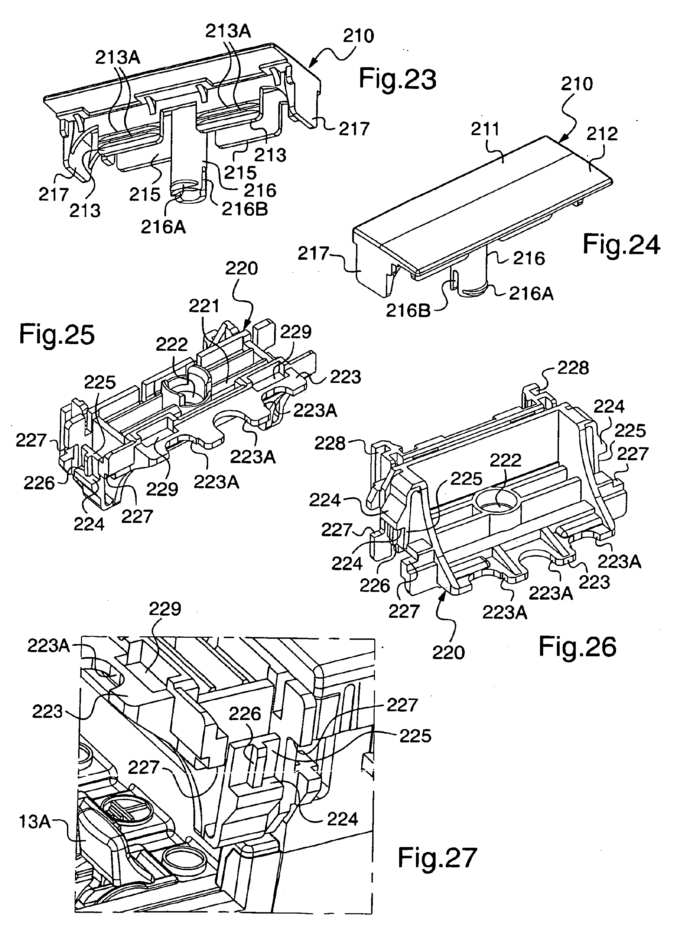

Enfin, selon l'exemple représenté sur les figures 21 à 27, le support 220 comporte également des moyens d'appariement au socle 11 de l'appareillage électrique 10. Ici, comme le montre la figure 26, les moyens d'appariement comprennent des rainures 228 adaptées à s'engager sur des nervures correspondantes du socle 10.

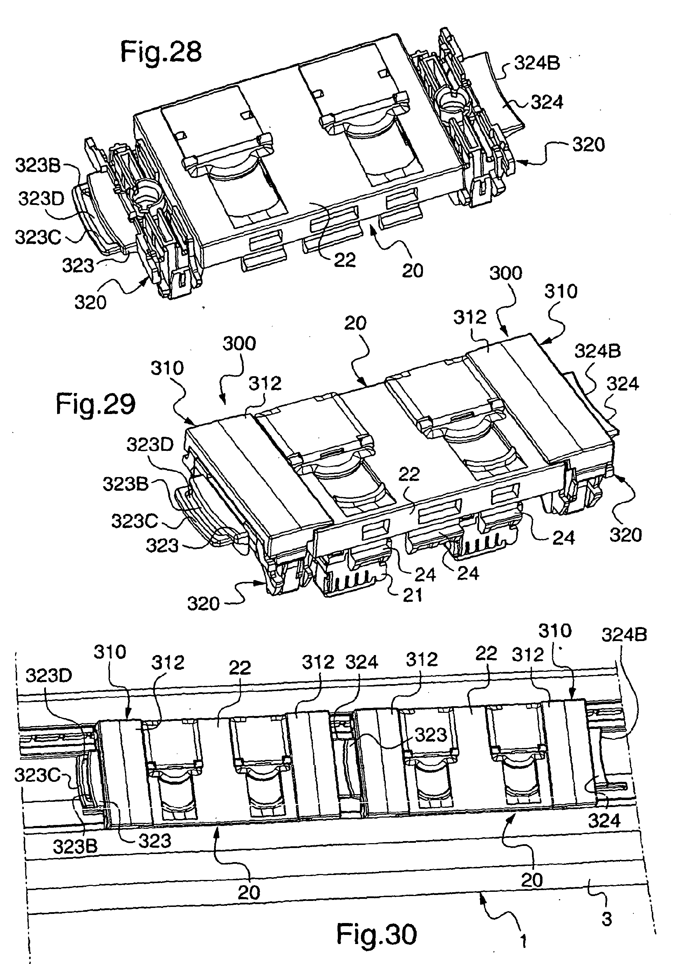

Sur les figures 28 à 31, on a représenté une deuxième variante de réalisation de l'accessoire de renfort 100 décrit en référence aux figures 1 à 20.

Pour l'essentiel, cet accessoire de renfort 300 est identique à l'accessoire de renfort 100, c'est pour cela qu'il ne sera pas ici décrit dans le détail mais seules seront décrites de façon détaillée les caractéristiques qui le distingue de ce dernier.

Il comporte un support 320 sur lequel est monté un cache 310. Le support 320 et le cache 310 sont deux pièces distinctes réalisées en une seule partie chacune par moulage d'une matière plastique.

Sur les figures 28 à 31, on a représenté deux accessoires de renfort 300 dont les supports 320 sont appariés à un autre appareillage électrique 20 « à clipsage direct » qui est une double prise data (par exemple RJ45).

Cet appareillage électrique 20 comporte un socle 21 commun qui renferme les deux mécanismes de prise data. Le socle 21 comporte en saillie sur deux faces latérales opposées des dents d'encliquetage 24 pour son accrochage direct au socle de goulotte 1. Le socle 21 est fermé à l'avant par une plaque enjoliveur 22 commune qui entoure les puits d'insertion des deux prises data.

Chaque accessoire de renfort 300 est remarquable en ce que son support 320 comporte des moyens de guidage 323B,323C,323D,324B qui assurent la juxtaposition jointive dudit support à un autre support du même type.

Lesdits moyens de guidage comprennent un moyen d'emboîtement 323B,323C,323D adapté à s'emboîter dans un moyen d'emboîtement complémentaire 324B de l'autre support.

Plus précisément, le support 320 de l'accessoire de renfort 300, situé sur les figures 28 et 29 à gauche de l'appareillage électrique 20, comporte en saillie et en porte-à-faux de sa plate-forme 323 dont le bord libre longitudinal 323B est bombé, une nervure 323C qui délimite avec le bord libre longitudinal 323B une ouverture d'engagement 323D. Le support 320 de l'autre accessoire de renfort 300, situé sur les figures 28 et 29 à droite de l'appareillage électrique 20, comporte une plate-forme 324 dont le bord libre longitudinal 324B est creusé de forme complémentaire au bord bombé 323B de la plate-forme 323 du support 320 de gauche. Cette plate-forme 324 comporte une face arrière creusée d'un logement d'emboîtement (non visible sur les figures). Le fond du logement d'emboîtement porte une nervure longitudinale adaptée à s'engager dans ladite ouverture d'engagement 323D.

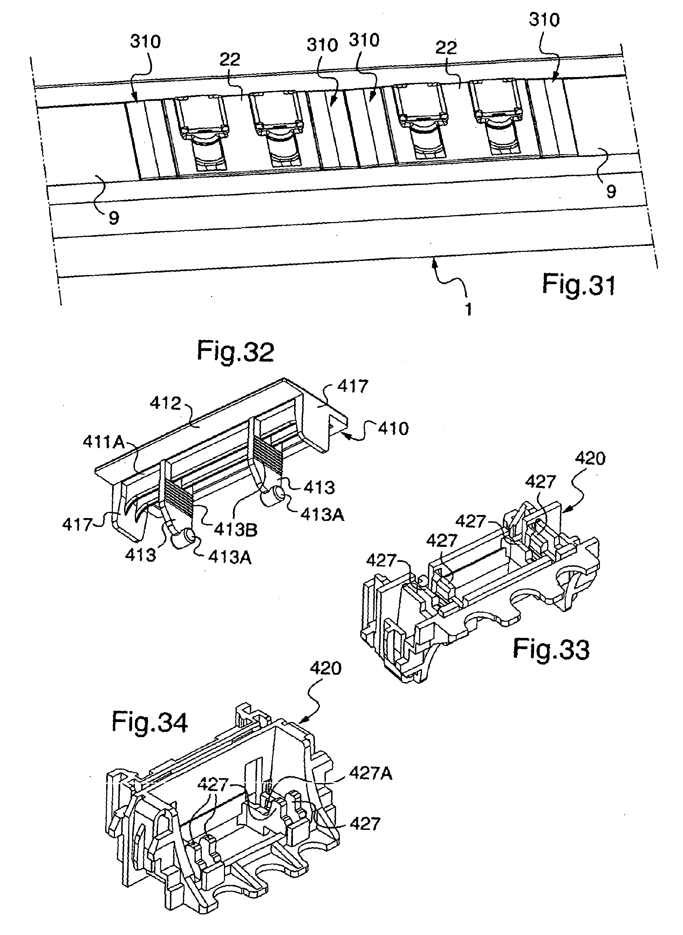

Sur les figures 30 et 31 on a représenté deux étapes de mise en place côte à côte de deux appareillages électriques 20 munis chacun de deux accessoires de renfort 300 tels que précités.

Chaque appareillage électrique 20 porte ses accessoires de renfort 300 avec les caches 310 en position de livraison de sorte que leur avancée 312 s'étend au-dessus de la plaque enjoliveur 22 de l'appareillage électrique 20. Dans cette configuration, chaque appareillage électrique 20 est encliqueté sur le socle de goulotte 1 de telle manière que la nervure 323C de la plate-forme 323 du support 320 de l'accessoire de gauche d'un appareillage électrique 20, s'engage dans le logement d'emboîtement de la plate-forme 324 du support 320 de l'accessoire de droite de l'autre appareillage électrique 20 jusqu'à ce que la nervure longitudinale portée par le fond dudit logement d'emboîtement s'engage dans ladite ouverture d'engagement 323D, et qu'ainsi le bord bombé 323B de la plate-forme 323 dudit support de l'accessoire de gauche du premier appareillage électrique 20 s'ajuste contre le bord creusé 324B de la plate-forme 324 dudit support de l'accessoire de droite de l'autre appareillage électrique 20 (voir figure 30).

Puis les caches 310 des accessoires de renfort 300 de gauche et de droite sont translatés et pivotés sur lesdits supports 320 de la même manière que celle décrite à propos de l'accessoire de renfort 100 pour être placés en position d'utilisation (voir figure 31). Dans cette position d'utilisation, les avancées des caches 310 des accessoires de renfort 300 situés entre les deux appareillages électriques 20 sont placés bord à bord tandis que l'avancée du cache 310 de chacun des accessoires de renfort 300 situés à l'extérieur des deux appareillages électriques 20 recouvre le bord transversal d'une extrémité coupée d'un tronçon de couvercle 9 rapporté dans l'ouverture longitudinale du socle de goulotte 1.

Sur les figures 32 à 40, on a représenté une variante de réalisation de l'accessoire de renfort 200 décrit en référence aux figures 21 à 27.

Pour l'essentiel, cet accessoire de renfort 400 est identique à l'accessoire de renfort 200, c'est pour cela qu'il ne sera pas ici décrit dans le détail mais seules seront décrites de façon détaillée les caractéristiques qui le distingue de ce dernier.

Il comporte un support 420 sur lequel est monté un cache 410. Le support 420 et le cache 410 sont deux pièces distinctes réalisées en une seule partie chacune par moulage d'une matière plastique.

Ici, le cache 410 est monté à translation et à basculement sur le support 420. La translation du cache 410 peut s'effectuer suivant deux axes, un axe perpendiculaire au plan dudit support et un axe parallèle au plan dudit support, en particulier parallèle aux côtés transversaux du support. Le basculement du cache 410 s'effectue autour d'un axe parallèle au plan du support, en particulier parallèle aux côtés longitudinaux du support.

Le cache 410 porte sur sa face arrière 411A deux pattes d'encliquetage 413 pourvues à leur extrémité d'un téton 413A adapté à glisser sur une rampe 427A prévue sur le support 420.

Les deux pattes d'encliquetage 413 s'étendent perpendiculairement à la face arrière 411A du cache 410 et sont parallèles aux côtés transversaux du cache 410. Elles portent sur chacune de leurs deux faces opposées une série de crans 413B.

Le support 420 comporte deux paires de nervures 427 parallèles aux côtés transversaux du support. Les deux nervures 427 de chaque paire définissent entre elles un passage au travers duquel est introduite une patte d'encliquetage 413 crantée. En outre, chaque nervure 427 d'une paire présente un bord extérieur courbe 427A (voir figures 34, 39 et 40). Les deux bords extérieurs courbes 427A de chaque paire de nervures 427 sont parallèles et forme la rampe de glissement du téton 413A de la patte d'encliquetage 413 crantée introduite au travers dudit passage défini entre lesdites nervures 427.

Les parois internes en regard des nervures 427 d'une même paire, portent deux rebords 428 en vis-à-vis sur lesquels s'accrochent les crans 413B de la patte d'encliquetage 413 crantée afin de bloquer le cache 410 à une distance déterminée du support 420 en fonction de l'épaisseur du tronçon de couvercle de fermeture à recouvrir. La pluralité de crans prévue sur lesdites pattes d'encliquetage 413 du cache 410 permet d'obtenir différents écartements entre le cache 410 et le support 420.

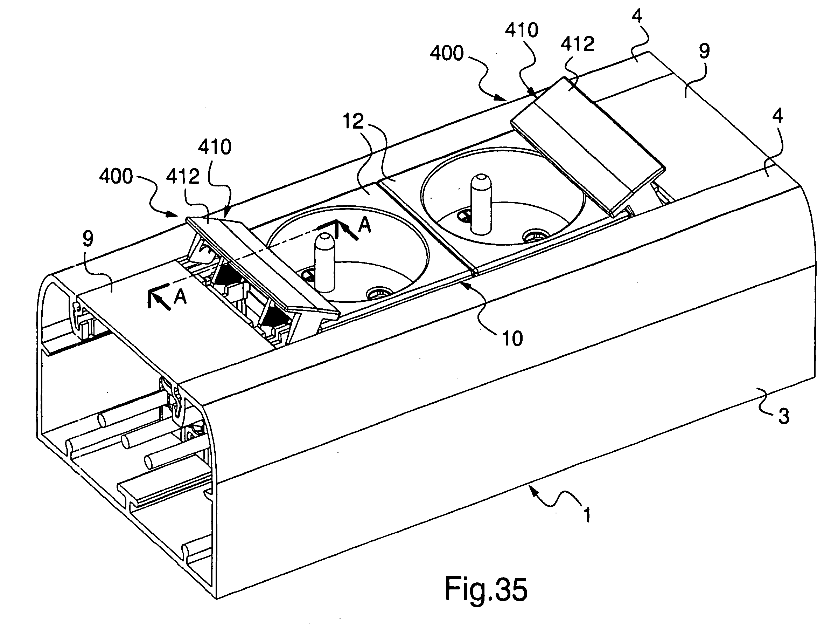

Comme le montre la figure 35, en position de livraison, le cache 410 de l'accessoire de renfort 400 dont le support 420 est apparié à l'appareillage électrique 10, est basculé contre l'enjoliveur 12 de l'appareillage électrique 10 de sorte que son avancée 412 est relevée.

Dans cette configuration, l'appareillage électrique 10, portant à ses extrémités ses deux accessoires de renfort 400, est encliqueté dans l'ouverture longitudinale du socle de goulotte 1 de sorte que les supports 420 de chaque accessoire s'accroche également audit socle.

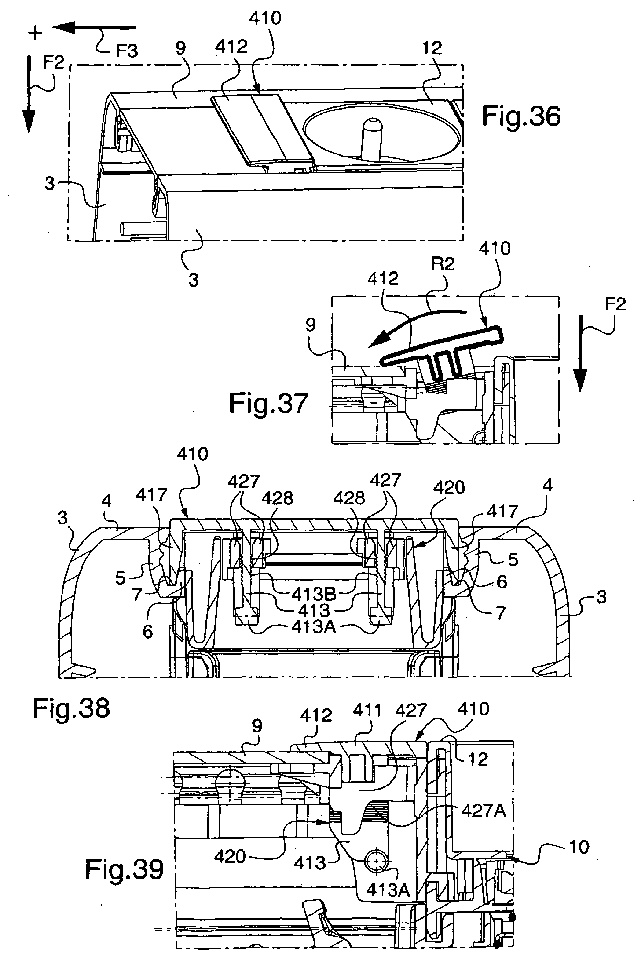

L'installateur rapporte alors les tronçons de couvercle 9 dans l'ouverture longitudinale du socle de goulotte et ramène le cache 410 de chaque accessoire de renfort 400 en position d'utilisation dans laquelle, d'une part, ses nervures 417 latérales sont introduites derrières les ailes longitudinales 6 des bandes de clispage dans les gorges longitudinales dudit socle de goulotte 1, et d'autre part, son avancée 412 recouvre le bord transversal de l'extrémité coupée dudit tronçon de couvercle 9 (voir figures 38 et 39).

Pour cela, il peut soit translater horizontalement (suivant la flèche F3) puis verticalement (suivant la flèche F2) le cache 410 sur le support 420 (voir figure 36), soit basculer le cache 410 suivant la flèche R2 vers le tronçon de couvercle 9 puis le translater verticalement suivant la flèche F2 (voir figure 37). Dans les deux cas, le téton 413A de chaque patte d'encliquetage 413 navigue sur la rampe 427A formée par lesdites nervures 427 puis, lorsqu'il quitte cette rampe 427A, la patte d'encliquetage 413 se déplace verticalement dans le passage défini entre lesdites nervures 427 pour se verrouiller sur ces nervures par l'accrochage de ses crans 413B sur les rebords 428 portés par lesdites nervures.

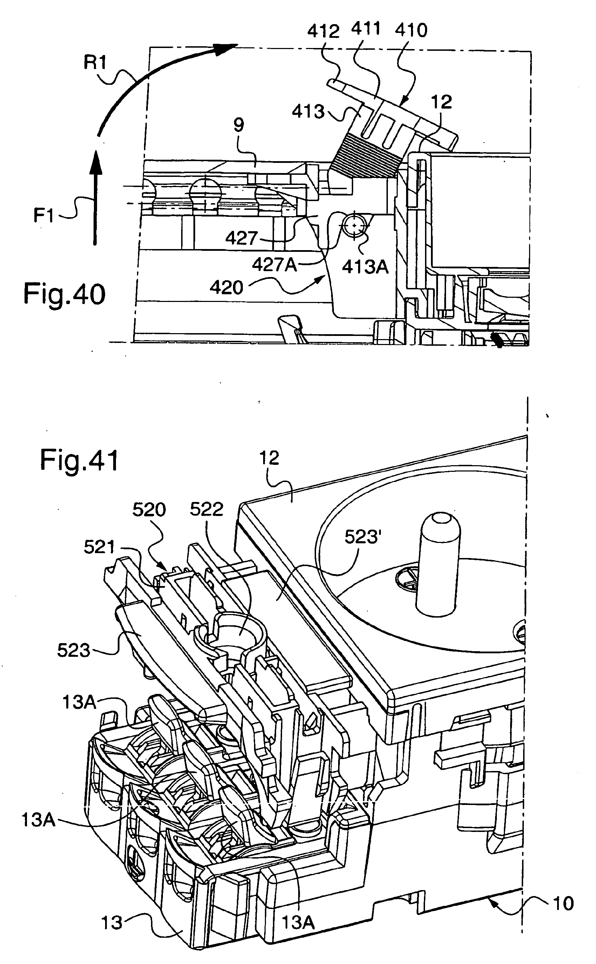

Pour relever le cache 410 depuis sa position d'utilisation rabattu sur le tronçon de couvercle 9 vers sa position de livraison basculé sur l'enjoliveur 12 de l'appareillage électrique 10, l'installateur tire verticalement le cache 410 vers le haut en translatant suivant la flèche F1 les pattes d'encliquetage 413 dans les passages définis entre les nervures 427 jusqu'à ce que les tétons 413A desdites pattes d'encliquetage 413 attrapent les rampes 427A définies par lesdites nervures 427 et permettent le basculement du cache 410 suivant la flèche R1 vers ledit enjoliveur 12 (voir figure 40).

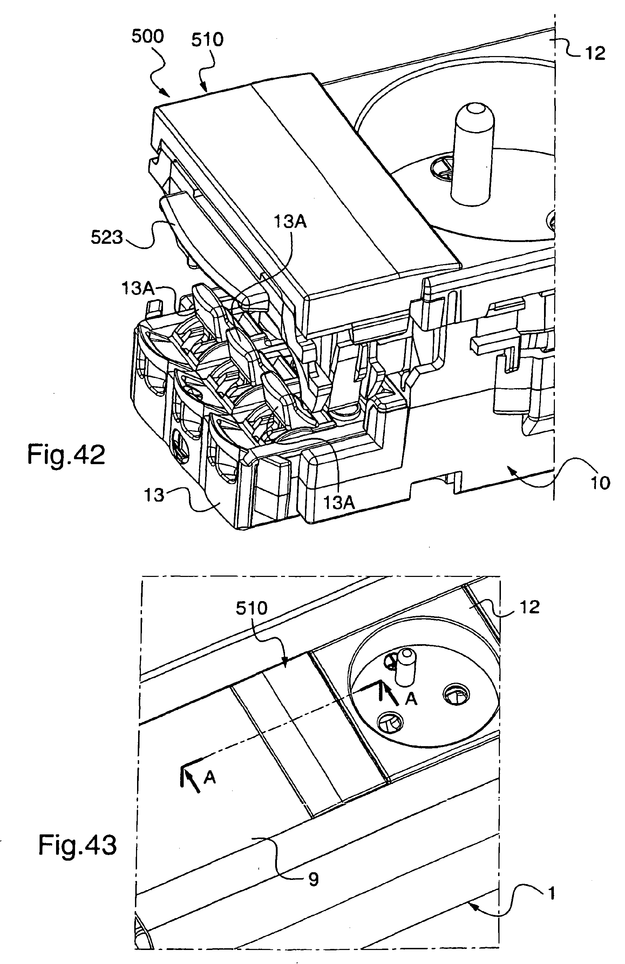

Sur les figures 41 à 48, on a représenté une troisième variante de réalisation de l'accessoire de renfort 100 décrit en référence aux figures 1 à 20.

Pour l'essentiel, cet accessoire 500 est identique à l'accessoire de renfort 100, c'est pour cela qu'il ne sera pas ici décrit dans le détail mais seules seront décrites de façon détaillée les caractéristiques qui le distingue de ce dernier.

II comporte un support 520 sur lequel est monté un cache 510 ou un cache 510'. Le support 520, le cache 510 et le cache 510' sont des pièces distinctes réalisées en une seule partie chacune par moulage d'une matière plastique.

Plus précisément, comme le montrent les figures 41, 44, et 45, le support 520 est remarquable en ce qu'il comporte, en porte-à-faux, le long de ses deux côtés longitudinaux, deux plate-forme 523, 523'. Chaque plate-forme 523,523' est adaptée à s'engager sous le bord transversal de l'extrémité coupée d'un tronçon couvercle rapporté dans l'ouverture longitudinale du socle de goulotte 1.

Ainsi, le support 520 forme avec le cache 510 similaire au cache 110 de l'accessoire 100, un accessoire de renfort à apparier à un appareillage électrique 10 « à clipsage direct » sur le socle de goulotte 1 (figures 41 à 44).

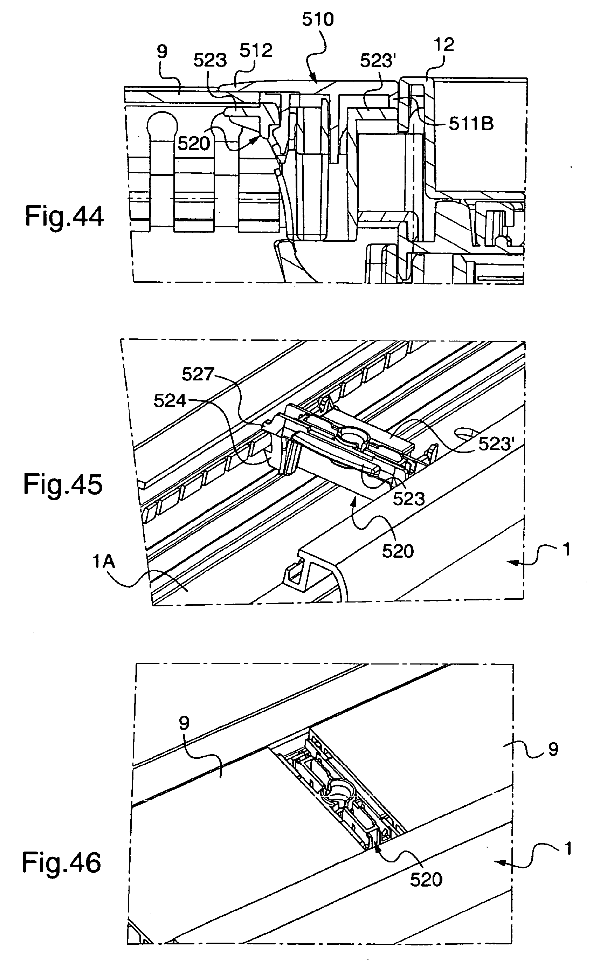

Dans ce cas, comme le montre la figure 44, lorsque le cache 510 est placé en position d'utilisation, l'extrémité coupée du tronçon de couvercle 9 est prise en sandwich entre l'avancée 512 du cache 510 et la plate-forme 523 correspondante du support 520 et le bord tombant 511 B du cache 510, qui longe le bord longitudinal libre du cache opposé à l'avancée 512, jouxte l'enjoliveur 12 de l'appareillage électrique 10 et repose sur l'autre plate-forme 523' du support 520.

Au surplus, le support 520 forme avec l'autre cache 510' un accessoire de jonction de deux tronçons de couvercle 9 (figures 45 à 48).

Le cache 510' diffère du cache 510 en ce qu'il est symétrique. Il comporte, en porte-à-faux, le long des deux côtés longitudinaux parallèles de sa partie principale 511', deux avancées 512' destinées chacune à recouvrir un bord transversal d'une extrémité coupée d'un tronçon de couvercle 9 rapporté dans l'ouverture longitudinale du socle. En outre, il n'est pas agencé pour pivoter sur le support 520 mais pour être encliqueté frontalement sur ce dernier.

Ainsi, lorsque l'accessoire 500 est utilisé en tant que jonction de couvercle, le support 520 est monté, grâce à ses dents d'encliquetage 524 et ses nervures 527, sur les bandes de clipsage du socle de goulotte 1 en travers de son ouverture longitudinale 1A (voir figure 45). Puis deux tronçons de couvercle 9 sont rapportés dans l'ouverture longitudinale 1A du socle de goulotte 1 de sorte que les extrémités coupées desdits tronçons viennent en appui sur les deux plate-forme 523,523' du support 520 (voir figure 46).

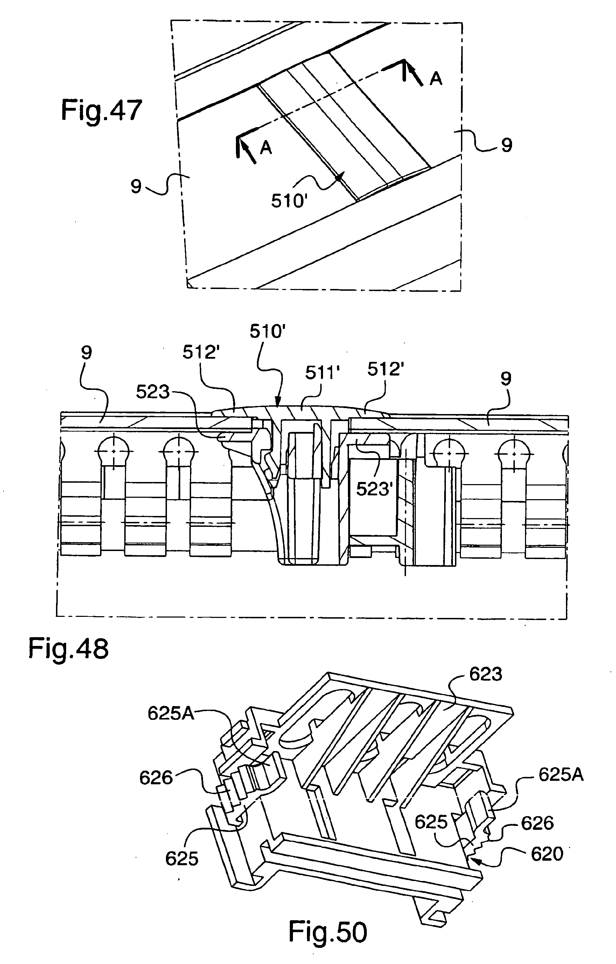

Le cache 510' symétrique est alors encliqueté frontalement dans les ouvertures correspondantes du support 520 de manière que ses deux avancées 512' recouvrent les bords transversaux desdites extrémités coupées des tronçons de couvercle 9. Les extrémités coupées des tronçons de couvercle 9 sont alors prises en sandwich entre les avancées 512' du cache 510' et les plate-forme 523,523' du support 520 (voir figures 47 et 48).

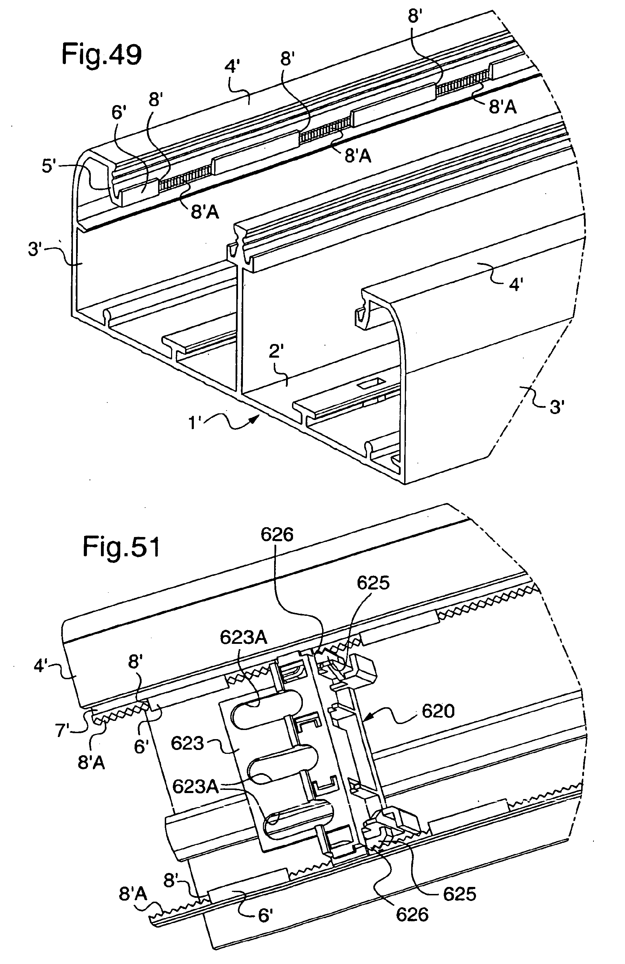

Sur les figures 49 et 51, on a représenté un autre socle de goulotte 1' spécialement adapté au montage d'une autre variante du support de l'accessoire selon l'invention.

Ce socle de goulotte 1' présente une section en U avec deux ailes latérales 3' parallèles qui s'élèvent à partir du fond 2' perpendiculairement à celui-ci.

Les deux ailes latérales 3' du socle de goulotte 1' comprennent des retours 4' dirigés l'un vers l'autre auxquels sont rattachées des parois longitudinales rentrantes 5' qui bordent l'ouverture longitudinale du socle de goulotte 1'.

Les deux parois longitudinales rentrantes 5' sont parallèles entre elles et aussi parallèles aux deux parois latérales 3' du socle de goulotte 1'.

L'ouverture longitudinale du socle de goulotte 1' est munie de deux bandes de clipsage aptes à permettre le montage de tronçons de couvercle 9 ainsi que le clipsage direct d'appareillages électriques.

Chaque bande de clipsage comporte une aile longitudinale 6' rattachée à l'extrémité intérieure libre de la paroi rentrante 5' correspondante par une entretoise 7'. Cette dernière définit avec ladite aile longitudinale 6' et la paroi rentrante 5', une gorge longitudinale ouverte vers l'avant du socle de goulotte 1'.

Chaque aile longitudinale 6' est interrompue localement par des crans 8' de plus grande longueur que celle des crans 8 du socle de goulotte 1. Chaque cran 8' est un renfoncement dont le fond est pourvu d'une série de stries 8'A. La longueur de chaque cran 8' est supérieure à la largeur du support 620 de sorte que celui-ci peut être déplacé en translation à l'intérieur dudit cran 8' grâce à des moyens d'immobilisation débrayables.

Sur la figure 50, on a représenté le support 620 spécialement adapté au montage sur ce socle de goulotte 1'. Ce support 620 comporte sur chacun de ses deux côtés transversaux parallèles les moyens d'immobilisation débrayables.

Ces moyens d'immobilisation débrayables comprennent une série de stries 626 adaptées à coopérer avec chaque série de stries 8'A prévue au fond de chaque cran 8' du socle de goulotte 1'.

Chaque série de stries 626 est formée sur la face externe d'une patte 625 rattachée par une liaison flexible (formant charnière d'articulation) au corps du support 620. Chaque patte 625 s'étend selon la direction longitudinale du socle de goulotte 1' et comporte à son extrémité libre une partie d'appui 625A pour un outil afin de la faire fléchir vers le corps du support 620 pour désengager les stries 626 qu'elle porte des stries 8A' du socle.

Le support 620 comporte par ailleurs une plate-forme 623 pourvue de trois ouvertures oblongues 623A au contour fermé, alignées suivant la direction longitudinale de la plate-forme, donnant accès à des bornes électriques que ladite plate-forme surplombe.

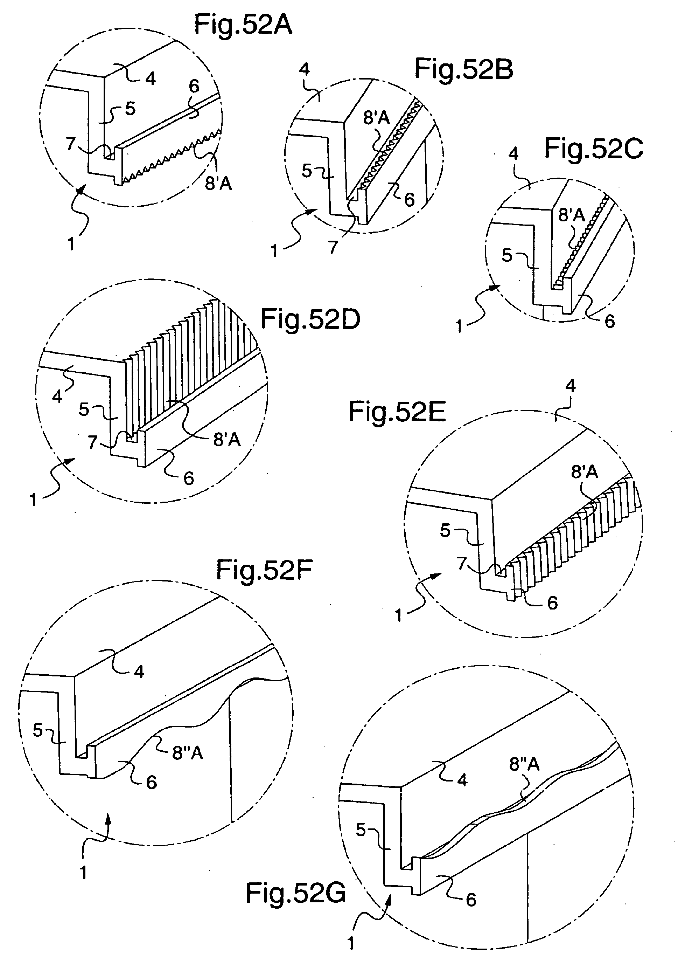

Sur les figures 52A à 52G on a représenté différentes variantes du socle de goulotte 1 qui comportent différentes configurations de moyens d'immobilisation adaptés à coopérer avec des moyens d'immobilisation complémentaires prévus sur le support de l'accessoire selon l'invention pour bloquer en translation longitudinale ledit support sur le socle de goulotte.

Les variantes représentées sur les figures 52A à 52E comportent des stries 8'A prévues sur le dessous, le derrière ou le devant de l'aile longitudinale 6 de chaque bande de clipsage du socle, ou des stries 8'A prévues au fond des gorges longitudinales du socle ou encore des stries 8'A prévues sur le devant de chaque paroi rentrante 5 portée par un retour 4 d'une aile latérale du socle.

Les variantes représentées sur les figures 52F et 52G comportent des ondulations 8"A prévues sur la tranche supérieure ou la tranche inférieure de l'aile longitudinale 6 de chaque bande de clipsage du socle.

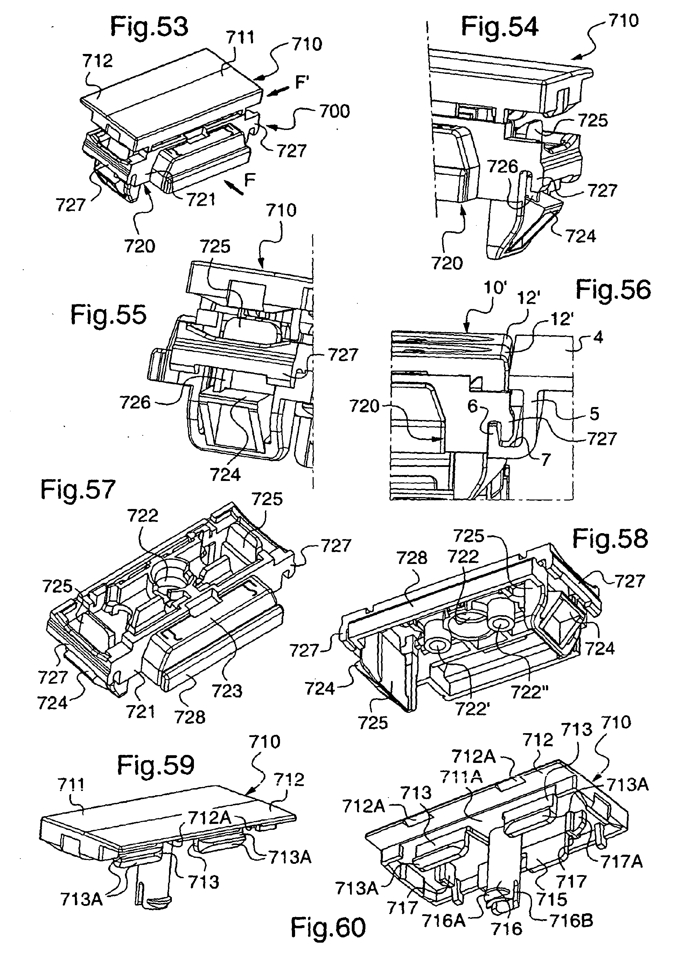

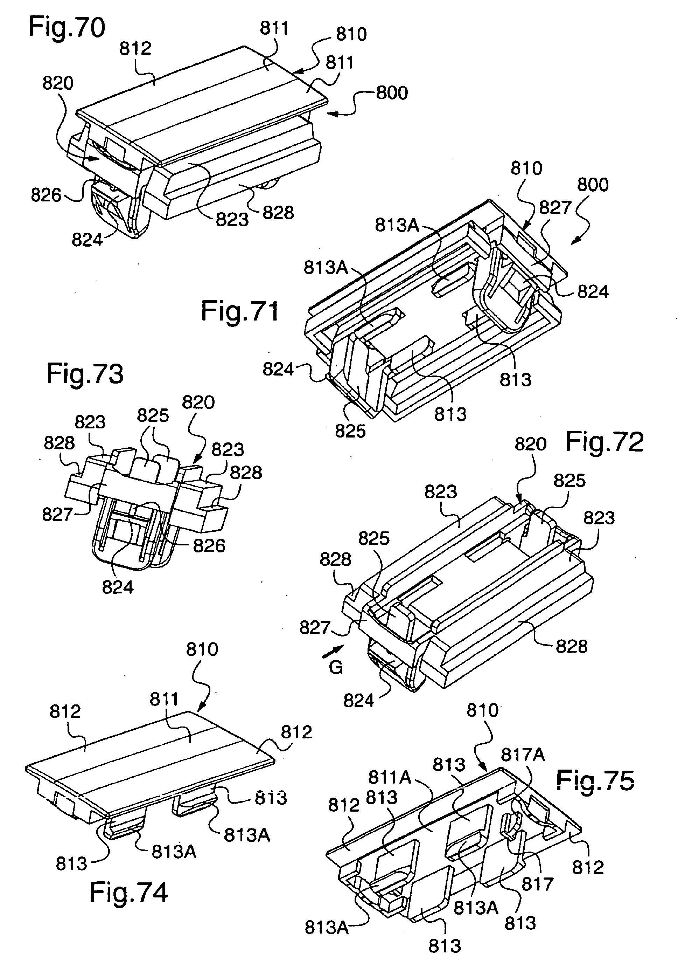

Sur les figures 53 à 69 et les figures 70 à 75, on a représenté deux autres variantes de réalisation de l'accessoire selon l'invention.

Pour l'essentiel, les accessoires 700 et 800 sont similaires à l'accessoire de renfort 100 décrit en référence aux figures 1 à 20, c'est pour cela qu'ils ne seront pas ici décrits dans le détail mais seules seront décrites de façon détaillée les caractéristiques qui les distinguent de ce dernier.

Les accessoires 700 et 800 sont des accessoires de renfort qui ne s'apparient pas à l'appareillage électrique 10' à côté duquel ils sont placés dans l'ouverture longitudinale du socle de goulotte.

Chacun d'entre eux comporte un support 720 ;820 sur lequel est monté un cache 710 ;810. Le support 720 ;820 et le cache 710 ;810 sont deux pièces distinctes réalisées en une seule partie chacune par moulage d'une matière plastique.

Le cache 710 de l'accessoire 700 est monté sur le support 720 de manière à pouvoir être translaté et pivoté autour d'un axe perpendiculaire audit support. Pour cela, il porte sur sa face arrière un pion central 716 d'axe perpendiculaire à ladite face, pourvu à son extrémité d'une dent de retenue 716A et d'une échancrure longitudinale 716B. Le pion central 716 est adapté à être engagé dans le puits 722 central du support 720 de façon à pouvoir coulisser suivant l'axe du puits et pivoter autour de son axe à l'intérieur dudit puits.

Le cache 710 est dissymétrique. Il comporte, en porte-à-faux, le long d'un côté longitudinal de sa partie principale 711, destinée à recouvrir la face avant du support 720, une avancée 712 adaptée à recouvrir le bord transversal de l'extrémité coupée d'un tronçon de couvercle 9 rapporté dans l'ouverture longitudinale du socle de goulotte, lorsque ledit cache 710 est placé dans sa position d'utilisation sur le support 720.

Le cache 810 de l'accessoire 800 est destiné à être encliqueté frontalement sur le support 820. Pour cela, la face arrière 811A de sa partie principale 811, destinée à recouvrir la face avant du support 820, porte deux paires de pattes d'encliquetage 813 parallèles, pourvues à leur extrémité libre d'une dent d'encliquetage 813A destinée à s'accrocher sur un bord d'une ouverture correspondante du support 820. Lesdites pattes d'encliquetage 813 constituent les moyens de verrouillage et de centrage du cache 810 sur le support 820.

Le cache 810 est symétrique. Il comporte, en porte-à-faux, sur les deux côtés longitudinaux, deux avancées 812 adaptées à recouvrir le bord transversal de l'extrémité coupée de deux tronçons de couvercle 9 rapportés dans l'ouverture longitudinale du socle de goulotte, lorsque ledit cache 810 est placé dans sa position d'utilisation sur le support 820.

Le support 720 de l'accessoire 700 est dissymétrique. Il comporte, en porte-à-faux, le long d'un côté longitudinal, en correspondance avec l'avancée 712 du cache 710, une plate-forme 723 adaptée à s'engager sous le bord transversal de l'extrémité coupée dudit tronçon de couvercle rapporté dans l'ouverture longitudinale du socle de goulotte.

Le support 820 de l'accessoire 800 est symétrique. Il comporte, en porte-à-faux, le long de ses deux côtés longitudinaux, en correspondance avec les avancées 812 du cache 810, deux plate-forme 823 adaptées à s'engager sous les bords transversaux des extrémités coupées desdits tronçons de couvercle rapportés dans l'ouverture longitudinale du socle de goulotte de part et d'autre de l'accessoire 800. Ainsi, avantageusement, l'accessoire 800 peut être utilisé en tant qu'accessoire de renfort, au même titre que l'accessoire 700, et en tant que jonction de couvercle, tout comme l'accessoire 500 décrit précédemment (voir les figures 45 à 48).

Avantageusement, chaque plate-forme 723 ;823 de chaque support 720 ;820 présente, le long de son bord libre longitudinal, une poutre 728 ;828 formant une rainure d'accrochage ouverte vers l'arrière de l'accessoire. Cette rainure d'accrochage est avantageusement utilisée lorsque le socle de goulotte est fixé verticalement sur une paroi, pour y accrocher un socle d'appareillage électrique « à clipsage direct ».

Ici, lesdits moyens d'accrochage de chaque accessoire 700 ;800, agencés pour coopérer avec les bandes de clipsage parallèles du socle de goulotte afin de stabiliser localement la largeur de son ouverture longitudinale, appartiennent au support 720 ;820.

Plus précisément, comme le montrent les figures 53 à 58 et 72, 73, le corps 721 ;821 du support 720 ;820 porte sur ses deux côtés transversaux parallèles, deux nervures 727 ;827 adaptées à s'engager derrière les ailes longitudinales 6 des bandes de clipsage du socle de goulotte dans les gorges longitudinales 7 formées à l'extrémité des retours 4 des ailes latérales du socle de goulotte (voir figure 56). Ces nervures 727 ;827 parallèles constituent lesdits moyens d'accrochage de l'accessoire de renfort 700 ;800.

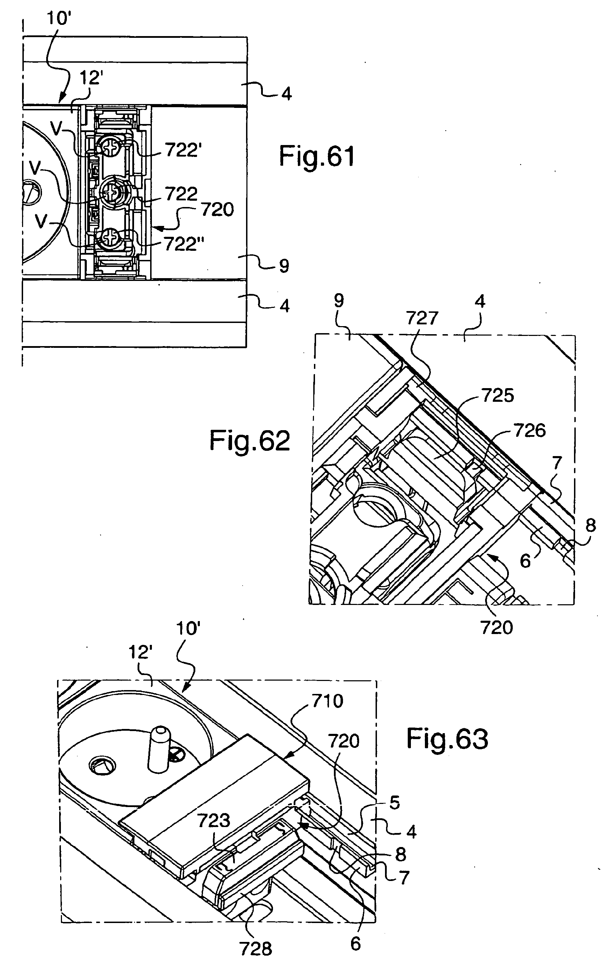

En outre, selon les deux exemples représentés, le support 720 ;820 comporte, sur chacun de ses côtés transversaux parallèles, une seule patte 725 ;825 rattachée par une liaison flexible (formant charnière d'articulation) au corps 721 ;821 du support 720 ;820. Chaque patte 725 ;825 flexible porte, en saillie, sur sa face externe, d'une part, le plot 726 ;826 adapté à coopérer avec un cran 8 du socle de goulotte pour immobiliser en translation le support 720 ;820 sur ledit socle (voir figure 62), et, d'autre part, en dessous de ce plot 726 ;826, la dent d'encliquetage 724 ;824 qui s'accroche sous la bande de clipsage du socle pour solidariser ledit support 720 à ce dernier.

Lesdites nervures 727 ;827 du support 720 ;820 s'étendent devant lesdites pattes 725 ;825 flexibles (voir figures 54 à 57 et 72,73).

En outre, le corps 721 du support 720 de l'accessoire 700, comporte de part et d'autre de son puits 722 central traversant, deux ouvertures traversantes 722',722". Avec le puits 722, le support 720 comporte ainsi trois ouvertures qui laissent dégagées les vis V des bornes du bornier de l'appareillage électrique. De cette manière, après avoir monté l'accessoire 700 dans l'ouverture longitudinale du socle à côté d'un des enjoliveurs 12' de l'appareillage électrique 10', l'installateur peut retirer le cache 710 du support 720 et facilement accéder aux vis V des bornes de l'appareillage (voir figure 61).

Par ailleurs, selon l'exemple représenté sur les figures 53 à 69, les moyens de centrage et de verrouillage du cache 710 sur le support 720 de l'accessoire 700 comprennent, sur le cache 710, deux pattes d'encliquetage 713 portant une pluralité de crans 713A d'encliquetage. Ces pattes d'encliquetage 713 sont portées par la face arrière 711A du cache 710. Elles s'étendent perpendiculairement à ladite face arrière et sont alignées parallèlement aux bords longitudinaux du cache 710. Elles sont destinée à s'engager dans des ouvertures prévues dans le corps 721 du support 720 de sorte qu'un de leurs crans s'accroche sur le rebord d'accrochage prévu sur la paroi de ces ouvertures.

La pluralité de crans 713A prévue sur les pattes d'encliquetage 713 permet d'ajuster en hauteur le cache 710 sur le support 720 afin d'adapter leur écartement relatif à des épaisseurs différentes de couvercle de fermeture de goulotte.

La face arrière 711A du cache 710 porte deux pattes de centrage 715 alignées et parallèles aux pattes d'encliquetage 713. Ces pattes de centrage 715 sont dépourvues de crans et sont destinées à s'engager dans des ouvertures correspondantes du support 720 pour placer correctement le cache sur ce dernier.

Entre les pattes d'encliquetage 713 et les pattes de centrage 715 du cache 710 et entre les pattes d'encliquetage 813 du cache 810, la face arrière 711A ;811A des caches 710 ;810 porte deux petites pattes 717 ;817 qui présentent chacune une face tournée vers un côté transversal du cache 710 ;810 pourvue d'une nervure 717A ;817A. Avantageusement, chaque nervure 717A ;817A est destinée à prendre appui contre le dos de chaque patte 725 ;825 flexible du support 720 ;820, lorsque ledit cache 710 ;810 est placé en position d'utilisation sur ce dernier.

Enfin, ladite avancée 712 du cache 710 de l'accessoire 700 comporte sur sa face arrière deux renfoncements 712A qui débouchent sur le bord longitudinal libre de ladite avancée 712.

En référence aux figures 62 à 69, nous allons décrire la mise en position d'utilisation de l'accessoire de renfort 700 à côté de l'appareillage électrique 10' déjà encliqueté dans le socle de goulotte 1.

L'accessoire de renfort 700 avec son cache 710 en position de livraison est encliqueté sur les bandes de clipsage du socle de goulotte 1 de sorte que le support 720 de l'accessoire s'accroche par ses dents d'encliquetage 724 auxdites bandes de clipsage et que les nervures 727 latérales du support 720 s'engagent derrière les ailes longitudinales des bandes de clipsage du socle de goulotte. Les plots 726 portés par les pattes 725 flexibles du support 720 s'engagent dans les deux crans 8 en vis-à-vis du socle de goulotte 1 (figure 62).

Dans cette position, l'avancée 712 du cache 710 s'étend au-dessus de la face avant de l'enjoliveur 12' de l'appareillage électrique 10' (figure 63).

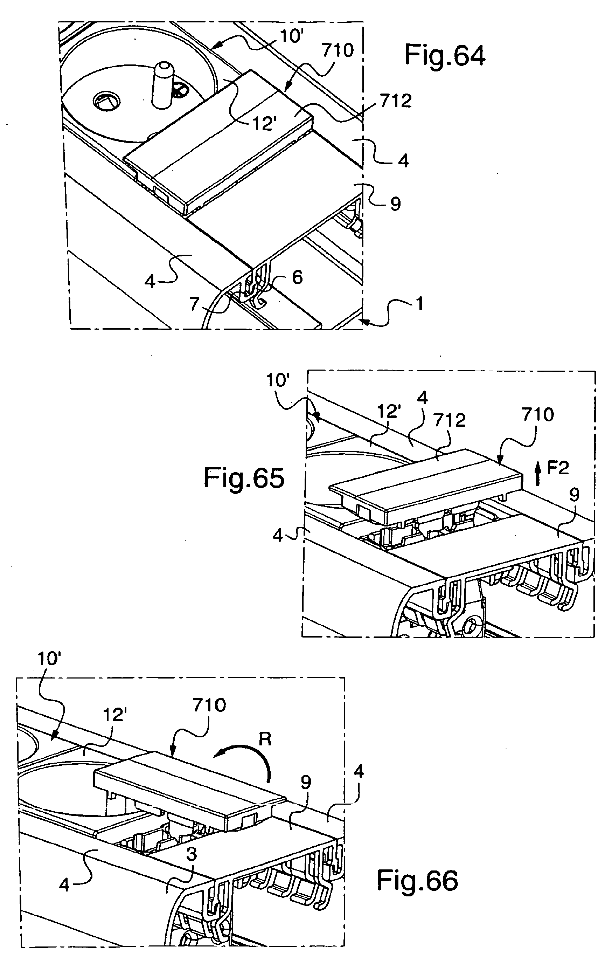

Puis l'installateur rapporte un tronçon de couvercle 9 sur le socle de goulotte 1 pour fermer son ouverture longitudinale à côté de l'accessoire 700 (figure 64).

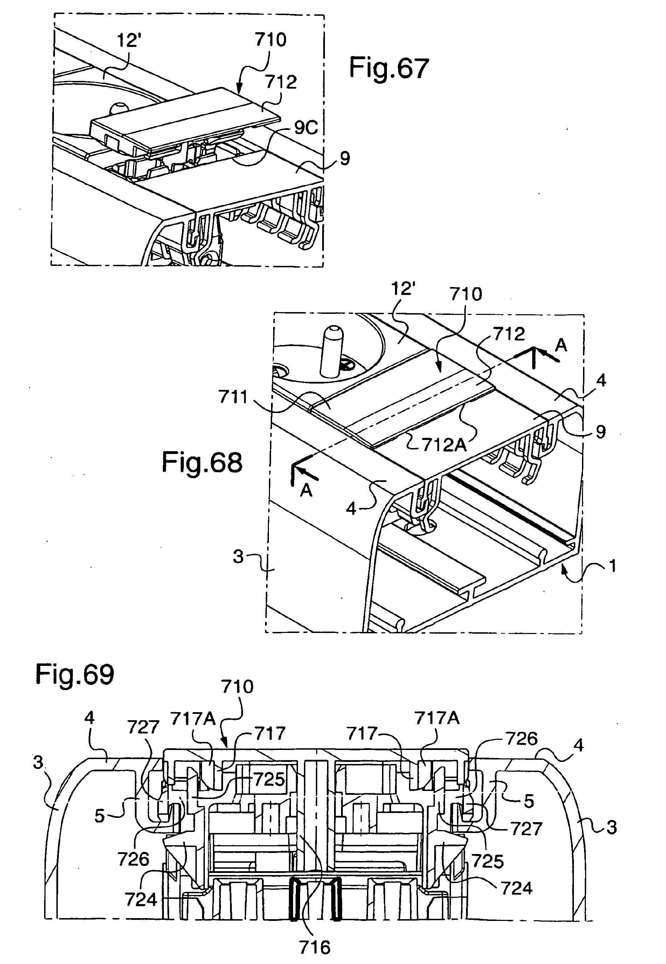

L'installateur soulève alors (selon la flèche F2) le cache 710 au-dessus de l'ensemble (voir figure 65) puis, dans cette position soulevée, le fait pivoter (selon la flèche R) de 360° autour de l'axe du pion central 716 (voir figures 66 et 67). Le soulèvement du cache 710 est autorisé par le coulissement du pion central 716 du cache 710 dans le puits 722 du support 720. Dans la position soulevée, le cache 710 est retenu sur son support 720 par la mise en butée de la dent de retenue 716A portée par le pion central 716 contre le rebord formé sur la face interne de la paroi cylindrique du puits 722 d'insertion.

Le cache 710 pivoté de 360° est alors abaissé sur le support 720 pour être placé dans sa position d'utilisation dans laquelle son avancée 712 recouvre le bord transversal de l'extrémité coupée du tronçon de couvercle 9 (figures 68 et 69).

Dans cette position d'utilisation, l'accessoire de renfort 700, non seulement, stabilise localement la largeur de l'ouverture longitudinale du socle, grâce à ses moyens d'accrochage 727, mais il réalise également une jonction étanche entre lui et le bord transversal de l'extrémité coupée du tronçon de couvercle 9 en prenant ledit bord transversal en sandwich entre l'avancée 712 du cache 710 et la plate-forme 723 du support 720. En outre, le support 720, par ses plots 726, bloque en translation axiale l'accessoire de renfort 700 sur le socle de goulotte 1.

La plate-forme 723 du support 720 forme avantageusement un appui pour l'extrémité coupée du tronçon de couvercle 9 correspondant de façon à permettre d'éviter que, lors d'un choc ou d'une pression, celui-ci ne s'enfonce dans le socle de goulotte.

Enfin, avantageusement, chaque nervure 717A du cache 710 prend appui contre le dos de chaque patte 725 flexible du support 720 et la pousse vers la bande de clipsage correspondante du socle pour verrouiller la dent d'encliquetage 724 du support 720 sur cette dernière.

Pour démonter facilement le cache 710 du support 720, l'utilisateur soulève ledit cache en introduisant la pointe d'un outil dans les renfoncements 712A du cache 710 (voir figure 68).

En variante, on pourrait prévoir que lesdits moyens d'immobilisation de l'accessoire soient conformés en creux sur les côtés transversaux parallèles de celui-ci et adaptés à coopérer avec des moyens complémentaires en saillie du socle de goulotte.

## Revendications

1. Accessoire (100) pour goulotte électrique, à rapporter en travers d'une ouverture longitudinale (1A) d'un socle de goulotte (1), qui comprend deux parties, à savoir un support (120) et un cache (110) rapporté sur ledit support, ainsi que des moyens d'accrochage (117) conformés le long de deux côtés transversaux parallèles de l'accessoire et agencés pour coopérer avec des bandes de clipsage parallèles dudit socle afin de stabiliser localement la largeur de ladite ouverture longitudinale, le cache (110) comportant, en porte-à-faux, le long d'au moins un côté longitudinal, une avancée (112) destinée à recouvrir un bord transversal (9C) d'une extrémité coupée d'un tronçon de couvercle (9) rapporté dans l'ouverture longitudinale du socle, **caractérisé en ce que** le cache (110) est monté sur ledit support (120) de manière mobile entre deux positions distinctes, à savoir, une première position dans laquelle le cache découvre ledit bord transversal de l'extrémité coupée du tronçon de couvercle et une deuxième position dans laquelle ladite avancée du cache recouvre ledit bord transversal de l'extrémité coupée du tronçon de couvercle.

2. Accessoire selon la revendication 1, dans lequel le cache (110) est mobile en rotation sur le support (120) autour d'un axe perpendiculaire audit support.

3. Accessoire selon l'une des revendications 1 et 2, dans lequel le cache (110 ;410) est mobile en translation sur le support, parallèlement et/ou perpendiculairement audit support (120 ;420).

4. Accessoire selon l'une des revendications 1 et 3, dans lequel le cache (410) est mobile à basculement sur le support (420) autour d'un axe parallèle audit support.

5. Accessoire selon l'une des revendications précédentes, qui comporte des moyens d'immobilisation (126) conformés en saillie ou en creux le long d'au moins un desdits deux côtés transversaux parallèles de l'accessoire et agencés pour coopérer avec des moyens complémentaires (8) prévus sur le socle afin d'immobiliser ledit accessoire selon la direction longitudinale dudit socle.

6. Accessoire selon la revendication précédente, dans lequel les moyens d'accrochage (117) sont distincts des moyens d'immobilisation (126).

7. Accessoire selon l'une des deux revendications précédentes, dans lequel les moyens d'immobilisation (126) appartiennent au support (120).

8. Accessoire selon l'une des revendications 5 et 6, dans lequel les moyens d'immobilisation appartiennent au cache.

9. Accessoire selon l'une des revendications précédentes, dans lequel les moyens d'accrochage (727 ;827) appartiennent au support (720 ;820).

10. Accessoire selon l'une des revendication 1 à 8, dans lequel les moyens d'accrochage (117) appartiennent au cache (110).

11. Accessoire selon l'une des revendications précédentes, dans lequel lesdits moyens d'accrochage comprennent sur chacun desdits côtés transversaux parallèles, une nervure (117 ;727 ;827) adaptée à s'engager derrière une aile longitudinale (6) de la bande de clipsage correspondante du socle dans une gorge longitudinale (7) formée à l'extrémité d'un retour (4) d'une aile latérale (3) du socle de goulotte (1).

12. Accessoire selon l'une des revendications 5 à 11, dans lequel lesdits moyens d'immobilisation sont solidaires d'au moins une patte (225) rattachée par une liaison flexible à l'une ou l'autre des deux parties de l'accessoire.

13. Accessoire selon l'une des revendications 5 à 12, dans lequel lesdits moyens d'immobilisation comprennent au moins un plot (126 ;226) adapté à s'engager dans un cran (8) prévu sur ledit socle.

14. Accessoire selon l'une des revendications précédentes, dans lequel le support (120) comporte sur chacun de ses côtés transversaux parallèles, au moins une dent d'encliquetage (124) adaptée à s'encliqueter sur le socle de goulotte.

15. Accessoire selon les revendications 12 et 14, dans lequel chaque dent d'encliquetage (224) est portée par ladite patte (225) flexible à laquelle sont solidarisés lesdits moyens d'immobilisation.

16. Accessoire selon les revendications 12 et 14, dans lequel chaque dent d'encliquetage (124) est portée par une patte flexible distincte de celle à laquelle sont solidarisés lesdits moyens d'immobilisation.

17. Accessoire selon l'une des revendications 5 à 16, dans lequel lesdits moyens d'immobilisation comprennent au moins une série de stries (626) adaptées à coopérer avec une série de stries (8'A) complémentaires prévues sur ledit socle.

18. Accessoire selon l'une des revendications 5 à 16, dans lequel lesdits moyens d'immobilisation comprennent des ondulations adaptées à coopérer avec des ondulations (8"A) complémentaires prévues sur ledit socle.

19. Accessoire selon la revendication 2, dans lequel la rotation du cache sur le support est réalisée au moyen d'un pion central (116), appartenant à l'une des parties de l'accessoire, engagé dans un puits (122) appartenant à l'autre des parties de l'accessoire.

20. Accessoire selon la revendication précédente, dans lequel le pion central (116) porte une dent de retenue (116A) adaptée à s'accrocher sur un rebord dudit puits.

21. Accessoire selon l'une des deux revendications précédentes, dans lequel ledit pion central (116) est porté par la face arrière (111A) du cache (110) et le puits (122) est prévu dans une partie centrale du support (120).

22. Accessoire selon l'une des revendications 3 et 4, dans lequel le cache (410) porte sur sa face arrière deux pattes d'encliquetage (413) pourvues à leur extrémité d'un téton (413A) adapté à glisser sur une rampe (427A) prévue sur le support (420).

23. Accessoire selon l'une des revendications précédentes, dans lequel il est prévu des moyens de centrage et de verrouillage (113,114,115) du cache (110) sur le support (120).

24. Accessoire selon la revendication précédente, dans lequel lesdits moyens de centrage et de verrouillage comprennent, d'une part, sur l'une des parties de l'accessoire, au moins une patte d'encliquetage (113,114) qui porte au moins un cran (113a,114A), et, d'autre part, sur l'autre des parties de l'accessoire, au moins une ouverture accueillant ladite patte d'encliquetage et présentant un bord d'accrochage dudit cran porté par ladite patte d'encliquetage.

25. Accessoire selon la revendication précédente, dans lequel chaque patte d'encliquetage (113,114) crantée est portée par la face arrière (111A) du cache (110) et s'étend perpendiculairement à celle-ci et chaque ouverture est prévue dans ledit support (120).

26. Accessoire selon l'une des deux revendications précédentes, dans lequel lesdits moyens de centrage et de verrouillage comprennent, sur l'une des deux parties, au moins un couple de pattes d'encliquetage (113,114) de longueurs différentes portant chacune à leur extrémité libre un cran d'encliquetage (113A.114A).

27. Accessoire selon l'une des revendications 24 et 25, dans lequel lesdits moyens de centrage et de verrouillage comprennent, sur l'une des deux parties, au moins une patte d'encliquetage (213) portant une pluralité de crans d'encliquetage (213A).

28. Accessoire selon l'une des revendications précédentes, dans lequel le support comporte sur lesdits deux côtés transversaux parallèles au moins une nervure (127 ;227) agencée pour prendre appui contre le bord d'extrémité libre d'une aile longitudinale (6) de la bande de clipsage correspondante du socle.

29. Accessoire selon la revendication précédente, dans lequel il est prévu sur chacun desdits côtés transversaux parallèles du support deux nervures (227) parallèles, distantes l'une de l'autre, et adaptées à prendre appui contre le bord d'extrémité libre de l'aile longitudinale de la bande de clipsage correspondante.

30. Accessoire selon l'une des revendications précédentes, dans lequel le support comporte, en porte-à-faux, le long d'un côté longitudinal, en correspondance avec l'avancée (112) du cache (110), une plate-forme (123) adaptée à s'engager sous le bord transversal de l'extrémité coupée dudit tronçon de couvercle rapporté dans l'ouverture longitudinale du socle.

31. Accessoire selon la revendication précédente, dans lequel ladite plate-forme (223) du support comporte des ouvertures traversantes (223A) réparties sur sa longueur.

32. Accessoire selon l'une des deux revendications précédentes, dans lequel ladite plate-forme (723) du support présente le long de son bord libre longitudinal une poutre (728) formant une rainure d'accrochage ouverte vers l'arrière de l'accessoire.

33. Accessoire selon l'une des revendications précédentes, dans lequel le support comporte des moyens d'appariement (128) à un socle d'appareillage électrique à clipsage direct sur le socle de goulotte.

34. Accessoire selon la revendication précédente, dans lequel les moyens d'appariement comprennent des rainures (128).

35. Accessoire selon l'une des revendications précédentes, dans lequel le support comporte des moyens de guidage (323B,323C,323D,324B) qui assurent la juxtaposition jointive dudit support à un autre support du même type.

36. Accessoire selon la revendication précédente, dans lequel lesdits moyens de guidage comprennent un moyen d'emboîtement (323B,323C,323D,324B) adapté à s'emboîter dans un moyen d'emboîtement complémentaire de l'autre support.

37. Accessoire selon l'une des revendications précédentes, dans lequel le support (520) comporte, en porte-à-faux, le long de chacun de ses deux côtés longitudinaux, une plate-forme (523,523') adaptée à s'engager sous le bord transversal de l'extrémité coupée d'un tronçon couvercle rapporté dans l'ouverture longitudinale du socle.

38. Accessoire selon la revendication précédente, dans lequel le cache (510') comporte, en porte-à-faux, le long de ses deux côtés longitudinaux parallèles, deux avancées (512') destinées chacune à recouvrir un bord transversal d'une extrémité coupée d'un tronçon de couvercle rapporté dans l'ouverture longitudinale du socle.

39. Ensemble électrique comprenant, d'une part, une goulotte avec un socle de goulotte (1) présentant une ouverture longitudinale (1A) munie de deux bandes de clipsage aptes à permettre le montage direct d'appareillages électriques, chaque bande de clipsage comprenant une aile longitudinale (6) rattachée à une extrémité d'un retour (4) d'une aile latérale (3) dudit socle de goulotte (1), chaque bande de clipsage étant pourvue de moyens d'immobilisation (8), et, d'autre part, un accessoire (100) selon la revendication 5 dont les moyens d'immobilisation (126) sont adaptés à coopérer avec lesdits moyens d'immobilisation (8) du socle de goulotte (1).

40. Ensemble électrique selon la revendication précédente, dans lequel les ailes longitudinales (6) des bandes de clipsage du socle de goulotte (1) comprennent au moins un cran (8) adapté à recevoir un plot (126) dudit accessoire (100).

41. Ensemble électrique selon la revendication 39, dans lequel les ailes longitudinales (6) des bandes de clipsage du socle de goulotte comprennent au moins une série de stries (8A ;8'A) adaptées à coopérer avec une série de stries (626) complémentaires prévues sur l'accessoire.

42. Ensemble électrique selon la revendication 39, dans lequel les ailes longitudinales (6) des bandes de clipsage du socle de goulotte comprennent des ondulations (8"A) adaptées à coopérer avec des ondulations complémentaires prévues sur l'accessoire.

## Claims

1. An accessory (100) for an electricity duct, for fitting through a longitudinal opening (1A) of a duct base (1), the accessory comprising two portions, namely a support (120) and a mask (110) fitted on said support, together with catch means (117) shaped along two parallel transverse sides of the accessory and arranged to co-operate with parallel clip-fastener strips of said base so as to stabilize locally the width of said longitudinal opening, the mask (110) including a projection (112) cantilevered out along at least one longitudinal side the projection (112) serving to cover a transverse edge (9C) of a cut end of a segment of cover (9) fitted in the longitudinal opening of the base, the accessory being **characterized in that** the mask (110) is mounted on said support (120) so as to be movable between two distinct positions, namely a first position in which the mask uncovers said transverse edge of the cut end of the segment of cover, and a second position in which said projection of the mask covers said transverse end of the cut end of the segment of cover.

2. An accessory according to claim 1, wherein the mask (110) is mounted to turn on the support (120) about an axis perpendicular to said support.

3. An accessory according to claim 1 or claim 2, wherein the mask (110; 410) is mounted to move in translation on said support, in parallel with and/or perpendicularly to said support (120; 420).

4. An accessory according to claim 1 or claim 3, wherein the mask (410) is mounted to tilt on the support (420) about an axis parallel to said support.

5. An accessory according to any preceding claim, including holder means (126) projecting from or set back in the length of at least one of said two parallel transverse sides of the accessory and arranged to co-operate with complementary means (8) provided on the base in order to hold said accessory in the longitudinal direction of said base.

6. An accessory according to the preceding claim, wherein the catch means (117) are distinct from the holder means (126).

7. An accessory according to either one of the two preceding claims, wherein the holder means (126) form part of the support (120).

8. An accessory according to claim 5 or claim 6, wherein the holder means form part of the mask.

9. An accessory according to any preceding claim, wherein the catch means (727; 827) form part of the support (720; 820).

10. An accessory according to any one of claims 1 to 8, wherein the catch means (117) form part of the mask (110).

11. An accessory according to any preceding claim, wherein said catch means comprise a rib (117; 727; 827) on each of said parallel transverse sides, the rib (117; 727; 827) being adapted to engage behind a longitudinally-extending margin (6) of the corresponding clip-fastener strip of the base in a longitudinally-extending groove (7) formed in the end of a rim (4) of a flange (3) of the duct base (1).

12. An accessory according to any one of claims 5 to 11, wherein said holder means are secured to at least one tab (225) attached via a flexible connection to one or the other of the two portions of the accessory.

13. An accessory according to any one of claims 5 to 12, wherein said holder means comprise at least one fin (126, 226) adapted to engage in a catch (8) provided in said base.

14. An accessory according to any preceding claim, wherein the support (120) includes at least one snap-fastener tooth (124) on each of its parallel transverse sides, the tooth being adapted to snap-fasten with the duct base.

15. An accessory according to claims 12 and 14, wherein each snap-fastener tooth (224) is carried by said flexible tab (225) to which said holder means are secured.

16. An accessory according to claims 12 and 14, wherein each snap-fastener tooth (124) is carried by a flexible tab that is distinct from the tab to which said holder means are secured.

17. An accessory according to any one of claims 5 to 16, wherein said holder means comprise at least one rack (626) adapted to co-operate with a complementary rack (8'A) provided on said base.

18. An accessory according to any one of claims 5 to 16, wherein said holder means comprise undulations adapted to co-operate with complementary undulations (8"A) provided on said base.

19. An accessory according to claim 2, wherein the mask is turned on the support by means of a central peg (116) forming part of one of the portions of the accessory, and engaged in a well (122) forming part of the other of the portions of the accessory.

20. An accessory according to the preceding claim, wherein the central peg (116) includes a retaining tooth (116A) adapted to catch on a rim of said well.

21. An accessory according to either one of the two preceding claims, wherein said central peg (116) is carried by the rear face (111A) of the mask (110) and the well (122) is provided in a central portion of the support (120).

22. An accessory according to claim 3 or claim 4, wherein the mask (410) carries two snap-fastener tabs (413) on its rear face, the snap-fastener tabs (413) being provided at their ends with respective studs (413A) adapted to slide on ramps (427A) provided on the support (420).

23. An accessory according to any preceding claim, wherein centering and locking means (113, 114, 115) are provided for locking and centering the mask (110) on the support (120).

24. An accessory according to the preceding claim, wherein said centering and locking means comprise firstly on one of the portions of the accessory, at least one snap-fastener tab (113, 114) that carries at least one catch (113A, 114A), and secondly on the other portion of the accessory, at least one opening receiving said snap-fastener tab and presenting an edge for catching said catch carried by said snap-fastener tab.

25. An accessory according to the preceding claim, wherein each snap-fastener tab (113, 114) with a catch is carried by the rear face (111A) of the mask (110) and extends perpendicularly thereto, and each opening is provided in said support (120).

26. An accessory according to either one of the two preceding claims, wherein said centering and locking means comprise, on one of the two portions, at least one pair of snap-fastener tabs (113, 114) of different lengths, each carrying at its free end a respective snap-fastener catch (113A, 114A).

27. An accessory according to claim 24 or claim 25, wherein said centering and locking means comprise, on one of the two portions, at least one snap-fastener tab (213) carrying a plurality of snap-fastener catches (213A).

28. An accessory according to any preceding claim, wherein the support includes, on said two parallel transverse sides, at least one rib (127; 227) arranged to bear against the edge of the free end of a longitudinally-extending margin (6) of the corresponding clip-fastener strip of the base.

29. An accessory according to the preceding claim, wherein two spaced-apart parallel ribs (227) are provided on each of said parallel transverse sides, the ribs being adapted to bear against the edge of the free end of the longitudinally-extending margin of the corresponding clip-fastener strip.

30. An accessory according to any preceding claim, wherein the support includes a platform (123) cantilevered along a longitudinal side in correspondence with the projection (112) of the mask (110), the platform (123) being adapted to engage under the transverse edge of the cut end of said segment of cover fitted in the longitudinal opening of the base.

31. An accessory according to the preceding claim, wherein said platform (223) of the support includes through openings (223A) distributed along its length.

32. An accessory according to either one of the two preceding claims, wherein said platform (723) of the support presents a beam (728) along its longitudinal free edge, the beam forming a catch groove that is open towards the rear of the accessory.

33. An accessory according to any preceding claim, wherein the support includes pairing means (128) for pairing with an electrical equipment base for clipping directly to the duct base.

34. An accessory according to the preceding claim, wherein the pairing means comprise grooves (128).

35. An accessory according to any preceding claim, wherein the support includes guide means (323B, 323C, 323D, 324B) that provide abutting juxtaposition between said support and another support of the same type.

36. An accessory according to the preceding claim, wherein said guide means comprise joining means (323B, 323C, 323D, 324B) adapted to join in complementary joining means of the other support.

37. An accessory according to any preceding claim, wherein the support (520) includes a platform (523, 523') cantilevered out along each of its two longitudinal sides, each platform (523, 523') being adapted to engage under the transverse edge of the cut end of a segment of cover fitted in the longitudinal opening of the base.

38. An accessory according to the preceding claim, wherein the mask (510') includes two projections (512') cantilevered out along its two parallel longitudinal side, the projections (512') each being designed to cover a transverse edge of a cut end of a segment of cover fitted in the longitudinal opening of the base.

39. An electrical assembly comprising firstly a duct with a duct base (1) having a longitudinal opening (1A) provided with two clip-fastener strips suitable for enabling electrical equipment to be mounted directly thereto, each clip-fastener strip comprising a longitudinally-extending margin (6) attached to one end of a rim (4) of a flange (3) of said duct base (1), each clip-fastener strip being provided with holder means (8), and secondly an accessory (100) according to claim 5 having holder means (126) adapted to co-operate with said holder means (8) of the duct base (1).

40. An electrical assembly according to the preceding claim, wherein the longitudinally-extending margins (6) of the clip-fastener strips of the duct base (1) include at least one catch (8) adapted to receive a fin (126) of said accessory (100).

41. An electrical assembly according to claim 39, wherein the longitudinally-extending margins (6) of the clip-fastener strip of the duct base include at least one rack (8A; 8'A) adapted to co-operate with a complementary rack (626) provided on the accessory.

42. An electrical assembly according to claim 39, wherein the longitudinally-extended margins (6) of the clip-fastener strips of the duct base include undulations (8"A) adapted to co-operate with complementary undulations provided on the accessory.

## Patentansprüche

1. Zubehör (100) für Kabelkanal, das quer zu einer Längsöffnung (1A) eines Kabelkanalsockels (1) aufzusetzen ist und zwei Bereiche umfasst, nämlich eine Halterung (120) und eine Abdeckung (110), die auf die Halterung gesetzt wird, sowie Einrastmittel (117), die entlang von zwei parallelen Querseiten des Zubehörs zusammen gebildet und angeordnet sind, um mit parallelen Streifen zum Einclipsen am Sockel zusammenzuwirken, um die Breite der Längsöffnung an dieser Stelle zu stabilisieren, wobei die Abdeckung (110) überhängend entlang von mindestens einer Längsseite einen Vorsprung (112) aufweist, der einen Querrand (9C) eines abgeschnittenen Endes eines in die Längsöffnung des Sockels eingesetzten Deckelabschnitts (9) abdecken soll, **dadurch gekennzeichnet, dass** die Abdeckung (110) zwischen zwei verschiedenen Positionen beweglich auf der Halterung (120) montiert ist, nämlich einer ersten Position, in der die Abdeckung den Querrand des abgeschnittenen Endes des Deckelabschnittes frei lässt und einer zweiten Position, in der der Vorsprung der Abdeckung den Querrand des abgeschnittenen Endes des Deckelabschnittes abdeckt.

2. Zubehör nach Anspruch 1, bei dem sich die Abdeckung (110) um eine zur Halterung senkrechte Achse auf der Halterung (120) dreht.

3. Zubehör nach einem der Ansprüche 1 und 2, bei dem sich die Abdeckung (110; 410) parallel und/oder senkrecht zur Halterung (120; 420) geradlinig auf der Halterung bewegt.

4. Zubehör nach einem der Ansprüche 1 und 3, bei dem die Abdeckung (410) um eine zur Halterung parallele Achse auf der Halterung (420) geschwenkt werden kann.

5. Zubehör nach einem der vorausgehenden Ansprüche, das Klemmmittel (126) umfasst, die entlang von mindestens einer der zwei parallelen Querseiten des Zubehörs vor- oder zurückspringend zusammen gebildet und angeordnet sind, um mit ergänzenden Mitteln (8) am Sockel zusammenzuwirken, um das Zubehör gemäß der Längsrichtung des Sockels zu blockieren.

6. Zubehör nach vorausgehendem Anspruch, bei dem sich die Einrastmittel (117) von den Klemmmitteln (126) unterscheiden.

7. Zubehör nach einem der zwei vorausgehenden Ansprüche, bei dem die Klemmmittel (126) zur Halterung (120) gehören.

8. Zubehör nach einem der Ansprüche 5 und 6, bei dem die Klemmmittel zur Abdeckung gehören.

9. Zubehör nach einem der vorausgehenden Ansprüche, bei dem die Einrastmittel (727, 827) zur Halterung (720, 820) gehören.

10. Zubehör nach einem der Ansprüche 1 bis 8, bei dem die Einrastmittel (117) zur Abdeckung (110) gehören.

11. Zubehör nach einem der vorausgehenden Ansprüche, bei dem die Einrastmittel auf beiden parallelen Querseiten eine Rippe (117, 727, 827) umfassen, die sich zum Eindrücken hinter einem Längsflügel (6) des entsprechenden Streifens zum Einclipsen am Sockel in eine Längsnut (7) eignet, die am Ende einer Rückführung (4) eines Seitenflügels (3) des Kabelkanalsockels (1) vorhanden ist.

12. Zubehör nach einem der Ansprüche 5 bis 11, bei dem die Klemmmittel mit mindestens einer Lasche (225) fest verbunden sind, die durch eine flexible Verbindung an einem der beiden Bereiche des Zubehörs anformt ist.

13. Zubehör nach einem der Ansprüche 5 bis 12, bei dem die Klemmmittel mindestens einen Kontakt (126, 226) umfassen, der in eine am Sockel vorgesehene Raste (8) eingedrückt werden kann.

14. Zubehör nach einem der vorausgehenden Ansprüche, bei dem die Halterung (120) an jeder ihrer parallelen Querseiten mindestens einen Einrastzahn (124) umfasst, der am Kabelkanalsockel einrasten kann.

15. Zubehör nach den Ansprüchen 12 und 14, bei dem jeder Einrastzahn (224) von der flexiblen Lasche (225) getragen wird, mit der die Klemmmittel fest verbunden sind.

16. Zubehör nach den Ansprüchen 12 und 14, bei dem jeder Einrastzahn (124) von einer flexiblen Lasche getragen wird, die sich von der Lasche unterscheidet, mit der die Klemmmittel fest verbunden sind.

17. Zubehör nach einem der Ansprüche 5 bis 16, bei dem die Klemmmittel mindestens eine Reihe von Rillen (626) umfassen, die mit einer Reihe von ergänzenden Rillen (8'A) am Sockel zusammenwirken können.

18. Zubehör nach einem der Ansprüche 5 bis 16, bei dem die Klemmmittel Wellungen umfassen, die mit ergänzenden Wellungen (8"A) am Sockel zusammenwirken können.

19. Zubehör nach Anspruch 2, bei dem das Drehen der Abdeckung auf der Halterung mittels einem zentralen Stift (116) erfolgt, der zu einem der Bereiche des Zubehörs gehört und in eine Steckstelle (122) gesteckt wird, die zum anderen Bereich des Zubehörs gehört.

20. Zubehör nach vorausgehendem Anspruch, bei dem der zentrale Stift (116) einen Haltezahn (116A) hat, der an einem Rand der Steckstelle eingehängt werden kann.

21. Zubehör nach einem der zwei vorausgehenden Ansprüche, bei dem der zentrale Stift (116) von der Rückseite (111A) der Abdeckung (110) getragen wird und die Steckstelle (122) in einem zentralen Bereich der Halterung (120) vorgesehen ist.

22. Zubehör nach einem der Ansprüche 3 und 4, bei dem die Abdeckung (410) an ihrer Rückseite zwei Einrastlaschen (413) trägt, die an ihrem Ende jeweils mit einem Zapfen (413A) versehen sind, der auf einer Rampe (427A) an der Halterung (420) gleiten kann.

23. Zubehör nach einem der vorausgehenden Ansprüche, bei dem Zentrier- und Verriegelungsmittel (113, 114, 115) für die Abdeckung (110) auf der Halterung (120) vorgesehen sind.

24. Zubehör nach vorausgehendem Anspruch, bei dem die Zentrier- und Verriegelungsmittel zum einen auf einem der Bereiche des Zubehörs mindestens eine Einrastlasche (113, 114) umfassen, die mindestens eine Raste (113a, 114A) aufweist, und zum anderen auf dem anderen der Bereiche des Zubehörs mindestens eine Öffnung umfassen, die die Einrastlasche aufnimmt und einen Einhängerand für die Raste der Einrastlasche aufweist.

25. Zubehör nach vorausgehendem Anspruch, bei dem jede gezahnte Einrastlasche (113, 114) von der Rückseite (111A) der Abdeckung (110) gehalten wird und sich senkrecht zu ihr erstreckt und jede Öffnung in der Halterung (120) vorgesehen ist.

26. Zubehör nach einem der zwei vorausgehenden Ansprüche, bei dem die Zentrier- und Verriegelungsmittel an einem der beiden Bereiche mindestens ein Paar Einrastlaschen (113, 114) unterschiedlicher Länge umfassen, die jeweils an ihrem freien Ende eine Raste (113A,114A) aufweisen.

27. Zubehör nach einem der Ansprüche 24 und 25, bei dem die Zentrier- und Verriegelungsmittel an einem der beiden Bereiche mindestens eine Einrastlasche (213) mit einer Vielzahl von Rasten (213A) umfassen.

28. Zubehör nach einem der vorausgehenden Ansprüche, bei dem die Halterung an den zwei parallelen Querseiten mindestens eine Rippe (127, 227) hat, die angeordnet ist, um sich am Rand des freien Endes eines Längsflügels (6) des entsprechenden Streifens zum Einclipsen am Sockel abzustützen.

29. Zubehör nach vorausgehendem Anspruch, bei dem an jeder der parallelen Querseiten der Halterung zwei parallele und voneinander entfernte Rippen (227) vorgesehen sind, die sich am Rand des freien Endes des Längsflügels des entsprechenden Streifens zum Einclipsen abstützen können.

30. Zubehör nach einem der vorausgehenden Ansprüche, bei dem die Halterung überhängend entlang einer Längsseite, entsprechend zum Vorsprung (112) der Abdeckung (110), eine Platte (123) umfasst, die unter dem Querrand des abgeschnittenen Endes des in die Längsöffnung des Sockels eingesetzten Deckelabschnittes eindrückbar ist.

31. Zubehör nach vorausgehendem Anspruch, bei dem die Platte (223) der Halterung durchgehende Öffnungen (223A) besitzt, die auf ihrer Länge verteilt sind.

32. Zubehör nach einem der zwei vorausgehenden Ansprüche, bei dem die Platte (723) der Halterung entlang ihres freien Längsrandes einen Balken (728) aufweist, der eine nach hinten des Zubehörs offene Einrastnut bildet.

33. Zubehör nach einem der vorausgehenden Ansprüche, bei dem die Halterung Paarungsmittel (128) für einen Sockel elektrischer Geräte zum direkten Einclipsen auf dem Kabelkanalsockel umfasst.

34. Zubehör nach vorausgehendem Anspruch, bei dem die Paarungsmittel Nuten (128) umfassen.

35. Zubehör nach einem der vorausgehenden Ansprüche, bei dem die Halterung Führungsmittel (323B,323C,323D,324B) umfasst, die den fugendichten Zusammenbau der Halterung mit einer Halterung derselben Art gewährleisten.

36. Zubehör nach vorausgehendem Anspruch, bei dem die Führungsmittel ein Einbaumittel (323B,323C,323D,324B) umfassen, das in ein ergänzendes Einbaumittel der anderen Halterung eingebaut werden kann.

37. Zubehör nach einem der vorausgehenden Ansprüche, bei dem die Halterung (520) überhängend entlang jeder ihrer beiden Längsseiten eine Platte (523,523') umfasst, die unter dem Querrand des abgeschnittenen Endes eines in die Längsöffnung des Sockels eingesetzten Deckelabschnitts eingedrückt werden kann.

38. Zubehör nach vorausgehendem Anspruch, bei dem die Abdeckung (510') überhängend entlang ihren beiden parallelen Längsseiten zwei Vorsprünge (512') umfasst, die jeweils zum Überdecken eines Querrandes eines abgeschnittenen Endes eines in die Längsöffnung des Sockels eingesetzten Deckelabschnitts bestimmt sind.

39. Elektrisches System mit zum einen einem Kanal mit einem Kabelkanalsockel (1), der eine Längsöffnung (1A) mit zwei Streifen zum Einclipsen umfasst, die ein direktes Montieren von elektrischen Geräten ermöglichen, wobei jeder Streifen zum Einclipsen einen Längsflügel (6) umfasst, der einem Ende einer Rückführung (4) eines Seitenflügels (3) des Kabelkanalsockels (1) angehängt ist, wobei jeder Streifen zum Einclipsen mit Klemmmitteln (8) versehen ist, und zum anderen mit einem Zubehör (100) nach Anspruch 5, dessen Klemmmittel (126) dazu geeignet sind, mit den Klemmmitteln (8) des Kabelkanalsockels (1) zusammenzuwirken.

40. Elektrisches System nach vorausgehendem Anspruch, bei dem die Längsflügel (6) der Streifen zum Einclipsen des Kabelkanalsockels (1) mindestens einen Raster (8) umfassen, der sich dazu eignet, einen Kontakt (126) des Zubehörs (100) aufzunehmen.

41. Elektrisches System nach Anspruch 39, bei dem die Längsflügel (6) der Streifen zum Einclipsen des Kabelkanalsockels mindestens eine Reihe von Rillen (8A, 8'A) umfassen, die sich dazu eignen, mit einer Reihe von ergänzenden Rillen (626) zusammenzuwirken, die am Zubehör vorgesehen sind.

42. Elektrisches System nach Anspruch 39, bei dem die Längsflügel (6) der Streifen zum Einclipsen des Kabelkanalsockels Wellungen (8"A) umfassen, die sich dazu eignen, mit ergänzenden Wellungen zusammenzuwirken, die am Zubehör vorgesehen sind.
